(19) Europäisches Patentamt
European Patent Office
Office européen des brevets

(11) **EP 3 161 436 B1**

(12) **EUROPEAN PATENT SPECIFICATION**

(45) Date of publication and mention
of the grant of the patent:
**20.03.2024 Bulletin 2024/12**

(21) Application number: **15811041.1**

(22) Date of filing: **29.06.2015**

(51) International Patent Classification (IPC):
*G01J 3/26* (2006.01)    *G02B 26/00* (2006.01)
*G02B 5/28* (2006.01)    *G01J 3/28* (2006.01)
*G02F 1/21* (2006.01)

(52) Cooperative Patent Classification (CPC):
**G01J 3/26; G01J 3/0227; G01J 3/0286; G01J 3/28;
G02B 26/001**

(86) International application number:
**PCT/FI2015/050476**

(87) International publication number:
**WO 2015/197920 (30.12.2015 Gazette 2015/52)**

(54) **A METHOD FOR DETERMINING THE SPECTRAL SCALE OF A SPECTROMETER AND APPARATUS**

VERFAHREN ZUR BESTIMMUNG DER SPEKTRALEN SKALA EINES SPEKTROMETERS UND VORRICHTUNG

PROCÉDÉ DE DÉTERMINATION D'ÉCHELLE SPECTRALE D'UN SPECTROMÈTRE ET APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2014 FI 20145626**

(43) Date of publication of application:
**03.05.2017 Bulletin 2017/18**

(73) Proprietor: **Spectral Engines OY
00380 Helsinki (FI)**

(72) Inventors:
• **ANTILA, Jarkko**
**FI-00380 Helsinki (FI)**
• **KANTOJÄRVI, Uula**
**FI-00380 Helsinki (FI)**
• **AKUJÄRVI, Altti**
**FI-02044 Vtt (FI)**

• **TUOHINIEMI, Mikko**
**FI-01621 Vantaa (FI)**
• **MÄKYNEN, Jussi**
**FI-00380 Helsinki (FI)**

(74) Representative: **Laine IP Oy
Porkkalankatu 24
00180 Helsinki (FI)**

(56) References cited:
EP-A2- 0 560 006        US-A1- 2004 070 768
US-A1- 2004 070 768    US-A1- 2005 134 861
US-A1- 2007 206 273    US-A1- 2010 250 182
US-A1- 2010 292 581    US-A1- 2010 292 581
US-A1- 2013 329 232    US-A1- 2014 176 729
US-A1- 2014 176 729    US-B1- 6 421 120
US-B1- 8 054 466        US-B2- 8 130 380

**Description**

FIELD

The present invention relates to a method for determining spectral calibration data of a Fabry-Perot interferometer. Some variations relate to spectral analysis of light. Further, the present invention relates to an apparatus.

BACKGROUND

The wavelength scale of a Fabry-Perot interferometer can be calibrated e.g. by measuring the excitation spectrum of a gas discharge lamp. The gas discharge lamp may typically contain e.g. argon, neon, xenon, krypton, hydrogen, or mercury. The spectrum of the gas discharge lamp comprises a high number of atomic emission lines, which are characteristic to the gas contained in the lamp. However, gas discharge lamps are not available for all wavelength regions of interest. The spectral separation between atomic lines may sometimes be too narrow for accurate calibration. The spectral separation between atomic lines may sometimes be too large for accurate calibration. The calibration lamps consume electrical power. The calibration lamps may be fragile.

Document US 2004/070768 A1 discloses, for example, a wavelength reference apparatus for use in calibrating a tunable Fabry-Perot filter or a tunable VCSEL, whereby the device may be tuned to a precise, known wavelength, the wavelength reference apparatus comprising an LED, where the LED is chosen so as to have an emission profile which varies with wavelength. Further, the reference apparatus comprises an etalon, where the etalon is chosen so as to have a transmission profile which comprises a comb of transmission peaks, with each transmission peak occurring at a precise, known wavelength. Furthermore, the reference apparatus comprises a detector for detecting the light emitted by the LED and passing through the etalon. When a tunable Fabry-Perot filter or tunable VCSEL is positioned between the etalon and the detector, and the device is swept through its tuning range by varying the tuning voltage applied to the device, the known transmission wavelengths established by the LED and the etalon can be correlated to counterpart tuning voltages of the device, whereby to calibrate the device. The specific wavelengths of transmission peaks are a function of the etalon's substrate thickness and refractive index. The thickness of the etalon and the refractive index are configured such that very narrow transmission peaks are obtained which are located relatively close to each other.

Such a configuration is disadvantageous when calibrating mid-resolution devices such as MEMS Fabry-Perot interferometer based devices. Two adjacent transmission peaks may be located too close to each other in order to unambiguously distinguish the peaks. For example, in case that the spectral resolution of a device is 10 nm and the specific wavelengths of transmission peaks of the etalon are spectrally 1 nm wide, about 90 % of the signal power is lost compared to a case in which the specific wavelengths of transmission peaks of the etalon have spectral width of 10 nm. Thus, very narrow transmission peaks which are located relatively close to each other can increase the calibration time per device by the multiplier 100. Additionally, the signal power transmitted through the etalon is relatively small.

Therefore, it would be beneficial to provide a method for determining spectral calibration data of a Fabry-Perot interferometer and an apparatus, wherein calibration time can be reduced and the signal power transmitted through the etalon can be increased. Additionally, it would be beneficial to provide a method and apparatus by means of which variation of performance characteristics due to temperature changes can be considered, thus improving precision of calibration.

SUMMARY

Some variations may relate to a method for calibrating a spectrometer. Some variations may relate to a method for measuring a spectrum. Some variations may relate to a spectrometer. Some variations may relate to a calibration device for calibrating a spectrometer. Some variations may relate to a computer program for calibrating a spectrometer. Some variations may relate to a computer program for measuring a spectrum. Some variations may relate to a computer program product, which comprises computer program code for calibrating a spectrometer. Some variations may relate to a computer program product, which comprises computer program code for measuring a spectrum.

According to a first aspect, there is provided a method according to claim 1.

According to a second aspect, there is provided an apparatus according to claim 12.

Further aspects are described in the dependent claims.

A spectrometer may comprise a Fabry-Perot interferometer and a detector for monitoring intensity of light transmitted through the Fabry-Perot interferometer. The Fabry-Perot interferometer may be used for measuring an intensity distribution by scanning the interferometer. The interferometer may be scanned by varying the mirror gap of the interferometer. The spectrometer may provide a control signal indicative of the mirror gap. The control signal may be provided e.g. by a control unit, and the mirror gap may be controlled according to the control signal. Alternatively, the control signal may be provided by monitoring the mirror gap, e.g. by using a capacitive sensor. The control signal may be e.g. a digital control signal or an analog control signal. Each spectral position may be associated with a control signal value such that the relationship between the spectral positions and the control signal values may be expressed by calibration data.

The spectral scale of the interferometer may be calibrated in order to perform accurate spectral analysis. Spectral calibration data of the interferometer may determine a relation for obtaining spectral positions from values of the control signal. The spectral calibration data may define the spectral scale of the interferometer. Each spectral position may be associated with a control signal value by using the spectral calibration data.

When monitoring an unknown spectrum, the spectrometer may be arranged to obtain intensity values from the detector as a function of the control signal. The measured intensity values may be associated with calibrated spectral positions by using the spectral calibration data. The spectral calibration data may comprise e.g. parameters of a regression function, which defines the relationship between each spectral position and the control signal value corresponding to said spectral position. The spectral calibration data may be stored e.g. in a memory of the spectrometer, and/or in a database server.

The Fabry-Perot interferometer comprises a first semi-transparent mirror and a second semi-transparent mirror, which are arranged to form an optical cavity of the interferometer. The Fabry-Perot interferometer may provide a narrow transmission peak, which has adjustable spectral position, and which can be used for spectral analysis. The spectral position of the transmission peak may be changed by changing the distance between the mirrors. The distance between mirrors may be called e.g. as the mirror gap or as the mirror spacing. The Fabry-Perot interferometer may have adjustable mirror gap.

The spectral position of the transmittance peak may be changed according to the control signal. The control signal may be e.g. a voltage signal, which is applied to a piezoelectric actuator of the Fabry-Perot interferometer in order to change the mirror gap of the Fabry-Perot interferometer. The control signal may be e.g. a voltage signal, which is applied to electrodes of an electrostatic actuator in order to change the mirror gap of the Fabry-Perot interferometer.

In an embodiment, the control signal may also be provided by a sensor. The control signal may indicate e.g. capacitor value of a capacitive sensor, which is arranged to monitor the mirror gap of the Fabry-Perot interferometer.

The relationship between each spectral position of the transmission peak and the control signal value corresponding to said spectral position may depend e.g. on the operating temperature of the Fabry-Perot interferometer. Said relationship may depend on the operating life (i.e. age) of the interferometer. Said relationship may be substantially changed e.g. if the interferometer experiences an impact (i.e. an acceleration shock). Said relationship may be substantially changed e.g. due to chemical corrosion.

A Fabry-Perot etalon is arranged to form a plurality of filtered spectral peaks. A Fabry-Perot interferometer is used for measuring the spectral intensity distribution of the filtered spectral peaks. The spectral calibration data of the interferometer is determined by matching the peaks of the measured distribution with the peaks of the spectral transmittance of the etalon. The spectral calibration data of the interferometer may be checked by comparing the measured distribution with the spectral transmittance of the etalon. The measured distribution is matched with the spectral transmittance using cross-correlation. The spectral calibration data may be checked by using cross-correlation analysis.

The spectral calibration data may be determined by matching spectral features of the measured spectral distribution with spectral features of the spectral transmittance of the etalon.

The spectral calibration data may be determined by matching spectral peaks of the measured spectral distribution with spectral peaks of the spectral transmittance of the etalon.

The spectral calibration data may be determined such that the measured spectral distribution matches with the spectral transmittance of the etalon, when the relation between the control signal and the spectral position is determined by using said spectral calibration data.

The spectral calibration data may be determined such that spectral features of the measured spectral distribution substantially coincide with spectral features of the spectral transmittance of the etalon, when the relation between the control signal and the spectral position is determined using said spectral calibration data.

The spectral calibration data may be determined such that the spectral position of a first spectral feature of the measured spectral distribution substantially coincides with the spectral position of a first spectral feature of the spectral transmittance of the etalon, when the relation between the control signal and the spectral position is determined using said spectral calibration data, and such that the spectral position of a second spectral feature of the measured spectral distribution substantially coincides with the spectral position of a second spectral feature of the spectral transmittance of the etalon, when the relation between the control signal and the spectral position is determined using said spectral calibration data,

The etalon may be placed in the optical path of the spectrometer. The etalon may provide a simple and highly stabile spectral reference for calibration and/or for measurement purposes. The spectral scale of the spectrometer may be stabilized by using a Fabry-Perot etalon, which has fixed mirror spacing.

Input light may be filtered by using a Fabry-Perot etalon in order to provide a plurality of spectral peaks. Said spectral peaks may be called e.g. as reference peaks or as filtered peaks. The etalon may comprise a substrate, which has a first planar surface and a second planar surface. The first planar surface and the second planar surface may be flat. The second planar surface is parallel to the first planar surface. The distance between the planar surfaces may be called as the mirror spacing of the etalon. The planar surfaces may form an optical cavity, which causes constructive and destructive interference such that broadband input light transmitted through the planar surfaces may have a plurality of the spectral reference peaks. The spectral position of transmittance peaks of the Fabry-Perot etalon may be highly stable.

The spectral position of transmittance peaks of the Fabry-Perot etalon may mainly depend on the mirror spacing of the etalon. The mirror spacing of the etalon may be substantially constant. The mirror spacing of the etalon may be substantially independent of air pressure, variations of humidity, ageing, and/or corrosion. The mirror spacing of the etalon may remain constant even after a mechanical impact. The mirror spacing of the etalon may have highly reproducible thermal expansion.

The Fabry-Perot etalon may have highly stable monolithic structure. The monolithic structure may be mechanically and thermally stabile. The monolithic etalon may be more stable than an etalon, where the reflectors are separated by an air gap. The mirror spacing of the etalon may be defined by the thickness of a substrate of the etalon. In that case, the stability of the etalon may mainly depend on the thermal stability of the substrate. In that case, the mirror spacing of the etalon may mainly depend on the magnitude of temperature variation and on the coefficient of thermal expansion (CTE) of the substrate. For example, the substrate may be silicon. For example, when the substrate is silicon and when the temperature of the substrate is monitored with an accuracy, which is better than 2°C, the wavelength stability may be better than 0.01 nm at the wavelength of 2 $\mu$m. In practice, the stability of the spectral scale may be e.g. better than 1 ppm. The coefficient of thermal expansion of silicon is approximately $2.6 \cdot 10^{-6}/°C$. The stability of the spectral scale may be e.g. better than 1 ppm ($=1/10^6$). The deviation $\lambda(S_{d1})-\lambda_{P1}$ between a determined wavelength $\lambda(S_{d1})$ and the true wavelength $\lambda_{P1}$ may be smaller than $10^{-6} \cdot \lambda_{P1}$.

In an embodiment, the spectral positions of the reference peaks may depend on the temperature of the substrate of the etalon, but the spectral positions of the reference peaks may be accurately determined based on temperature of the substrate. The temperature of the substrate may be monitored by a temperature sensor. The spectral positions of the reference peaks may be accurately known as a function of the temperature of the substrate. The temperature of the substrate of the etalon may be optionally monitored by a temperature sensor. The sensor may be implemented e.g. by a thermocouple, Pt100 sensor, or by a P-N junction.

In an embodiment, a Fabry-Perot spectrometer may be calibrated by using a light source unit, which comprises the etalon. In an embodiment, a spectroscopic apparatus may comprise a light source unit, the etalon, and the Fabry-Perot interferometer.

In an embodiment, the spectral scale of a spectrometer may be determined and/or verified when measuring an unknown spectrum of an object. The spectral calibration data may be determined and/or verified by using light received from said object. The spectral calibration may be performed on-line, when measuring the unknown spectrum of the object. The etalon may be e.g. temporarily positioned between the object and the spectrometer, or the spectrometer may permanently comprise the etalon.

Spectral stability may be a key parameter when analyzing spectra by the spectrometer. By using the etalon, the spectral scale may be stabilized even when the spectrometer is used in a harsh environment. A highly stable spectrometer may be provided by combining the scanning Fabry-Perot interferometer with the etalon. The etalon may be easily integrated in an on-line measurement system. In an embodiment, a Fabry-Perot spectrometer may comprise a permanently attached etalon for providing reference peaks.

The operation of the etalon as such does not require operating power. However, optional monitoring the temperature of the etalon may sometimes require a very low power.

Calibration by using an etalon may be used at various different wavelength regions, by selecting the material of the substrate and the optional coatings of the planar reflective surfaces of the etalon. By using the etalon, several reference peaks may be provided to cover a wide portion of the detection range of the spectrometer. In an embodiment, several reference peaks may be provided to cover substantially the whole detection range of the spectrometer.

In an embodiment, light may be coupled into a spectrometer by using one or more optical fibers.

In an embodiment, a light source unit may comprise the etalon, and calibration light provided by a light source unit may be coupled into a spectrometer for determining and/or checking the spectral scale of a spectrometer. In an embodiment, calibration light from a single light source unit may be distributed to several spectrometers in order to calibrate the spectral scales of said spectrometers substantially simultaneously. The calibration may be performed e.g. during production of the spectrometers. In an embodiment, even thousands of interferometers may be calibrated at a factory rapidly and/or with relatively low costs.

In an embodiment, the calibration light provided by a light source unit may be simultaneously distributed to a plurality of spectrometers by using optical fibers.

The calibration of the spectrometer may optionally comprise intensity calibration in addition to the spectral calibration. The intensity values of the spectrometer may be calibrated e.g. by measuring spectral intensity values of light obtained from a blackbody radiator or a tungsten ribbon lamp, and by comparing the measured spectral intensity values with intensity calibration data associated with said radiator or lamp.

The spectrometer may be used for analyzing spectra of samples e.g. in the pharmaceutical industry, in the beverage industry, in the food industry, or in petrochemical industry. The sample may comprise e.g. food, beverage, medicament, or a substance for producing a medicament.

Certain embodiments provide a method for determining spectral calibration data of a Fabry-Perot interferometer and an apparatus, wherein calibration time can be reduced and the signal power transmitted through the etalon can be increased. Additionally, certain embodiments provide a method and apparatus by means of which variation of performance characteristics due to temperature changes can be considered, thus improving precision of calibration.

BRIEF DESCRIPTION OF THE DRAWINGS

In the following examples, several variations will be described in more detail with reference to the appended drawings, in which

Fig. 1    shows, by way of example, a spectrometer, which comprises a Fabry-Perot interferometer,

Fig. 2    shows, by way of example, the spectral transmittance of a Fabry-Perot interferometer and a spectrum of light received from an object,

Fig. 3a   shows, by way of example, a light source unit,

Fig. 3b   shows, by way of example, the spectral transmittance of an etalon, a spectrum of filtered peaks, and a measured spectral intensity distribution,

Fig. 3c   shows, by way of example, a system for spectral calibration of a spectrometer,

Fig. 4a   shows, by way of example, control signal values corresponding to the spectral positions of the transmission peaks of the etalon,

Fig. 4b   shows, by way of example, a calibration function for obtaining spectral positions from control signal values,

Fig. 5    shows, by way of example, a spectrometer, which comprises a Fabry-Perot interferometer, and an etalon,

Fig. 6a   shows, by way of example, forming a filtered spectrum by using the etalon,

Fig. 6b   shows, by way of example, forming a calibrated measured spectrum from the measured distribution of Fig. 6a,

Fig. 6c   shows, by way of example, method steps for determining calibration data,

Fig. 7    shows, by way of example, a measurement system, which comprises a light source, a spectrometer, and an etalon,

Fig. 8a   shows, by way of example, forming a filtered absorption spectrum,

Fig. 8b   shows, by way of example, determining a calibrated absorption spectrum from the measured distribution of Fig. 8a,

Fig. 9    shows, by way of example, a measurement system, which comprises a light source, a spectrometer, and an etalon, and

Fig. 10   shows, by way of example, a Fabry-Perot interferometer, which comprises an electrostatic actuator, and

Fig. 11   shows, by way of example, a Fabry-Perot interferometer, which comprises a capacitive sensor for monitoring the mirror gap.

DETAILED DESCRIPTION

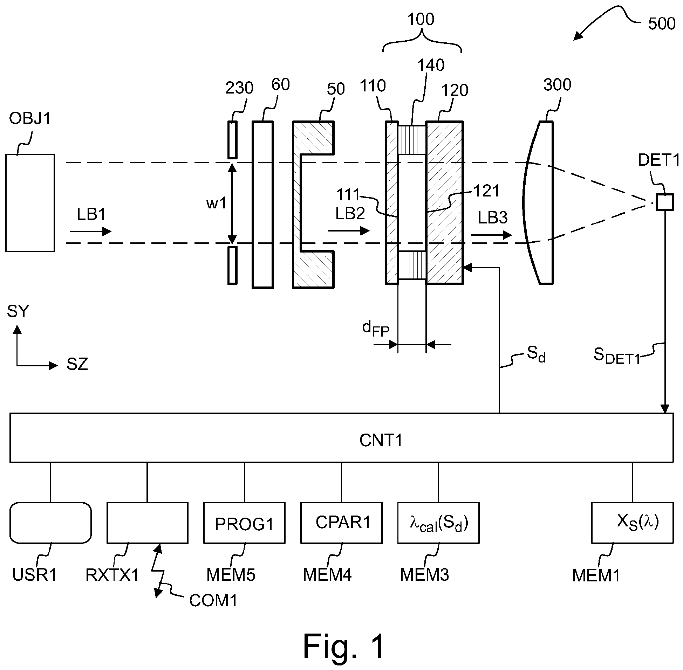

Referring to Fig. 1, a spectrometer 500 may comprise a Fabry-Perot interferometer 100 and a detector DET1. An object OBJ1 may reflect, emit and/or transmit light LB1. The light LB1 may be coupled into the spectrometer 500 in order to monitor the spectrum of the light LB1.

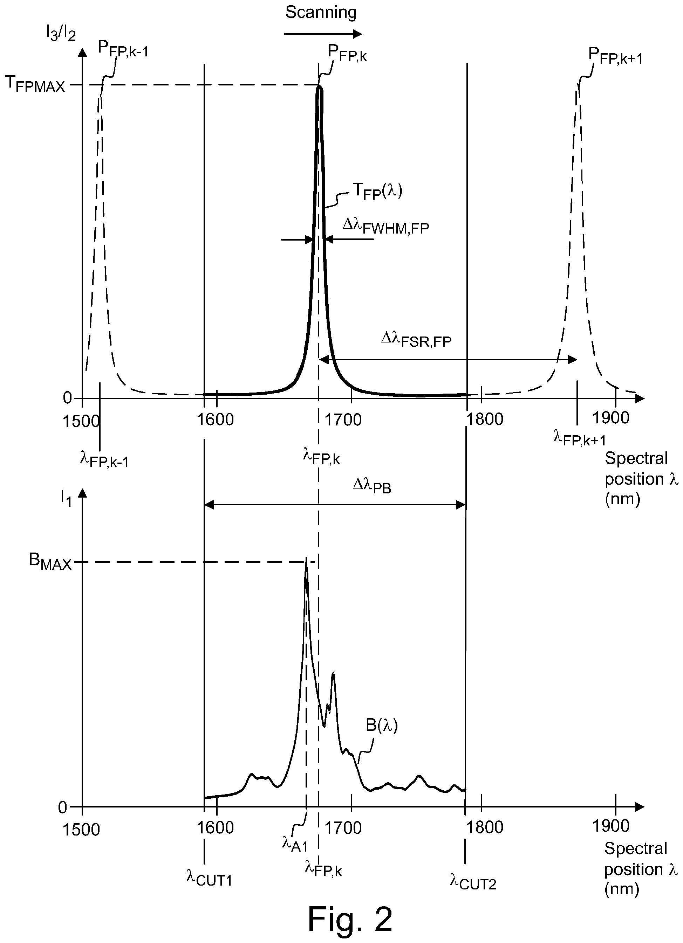

The Fabry-Perot interferometer 100 comprises a first semi-transparent mirror 110 and a second semi-transparent mirror 120. The distance between the first mirror 110 and the second mirror 120 is equal to a mirror gap $d_{FP}$. The mirror gap $d_{FP}$ may be adjustable. The first mirror 110 may have a solid-gas interface 111, and the second mirror 121 may have a solid-gas interface 121. The mirror gap $d_{FP}$ may denote the distance between the interfaces 111 and 121. The Fabry-Perot interferometer 100 may provide a transmission peak $P_{FP,k}$ (Fig. 2), wherein the spectral position of the transmission peak $P_{FP,k}$ may depend on the mirror gap $d_{FP}$. The spectral position of the transmission peak $P_{FP,k}$ may be changed by changing the mirror spacing $d_{FP}$. The transmission peak $P_{FP,k}$ may also be called as the passband of the Fabry-Perot interferometer 100.

The spectrometer 500 may comprise one or more filters 60 to define a detection band $\Delta\lambda_{PB}$ of the spectrometer 500. The filter 60 may provide filtered light LB2 by filtering the light LB1 received from the object OBJ1.

The Fabry-Perot interferometer 100 may form transmitted light LB3 by transmitting a portion of the filtered light LB2 to the detector DET1. Transmitted light LB3 obtained from interferometer 100 may be coupled to the detector DET1. The transmitted light LB3 may at least partly impinge on the detector DET1.

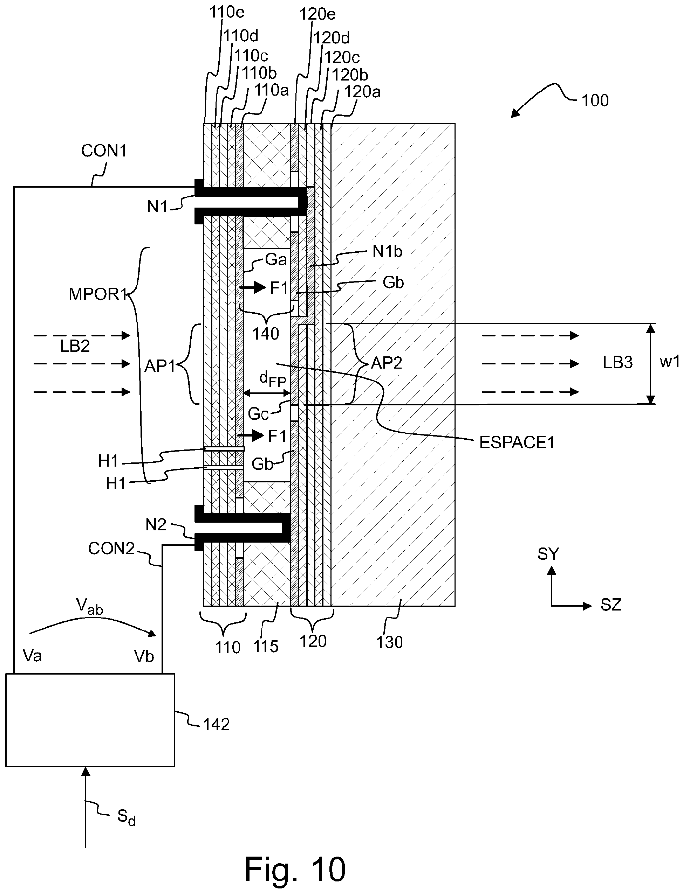

An actuator 140 may be arranged to move the first mirror 110 with respect to the second mirror 120. The actuator 140 may be e.g. an electrostatic actuator (Fig. 10), or a piezoelectric actuator. The mirrors 110, 120 may be substantially flat and substantially parallel to each other. The semi-transparent mirrors 110, 120 may comprise e.g. a metallic reflective layer and/or a reflective dielectric multilayer. One of the mirrors 110, 120 may be attached to a frame, and the other mirror may be moved by the actuator 140.

The light LB1 may be obtained from an object OBJ1. For example, the light LB1 may be emitted from the object, the light LB1 may be reflected from the object, and/or the light LB1 may be transmitted through the object. The spectrum of the light LB1 may be measured e.g. in order to determine emission spectrum, reflectance spectrum, and/or absorption spectrum of the object OBJ1.

The object OBJ1 may be e.g. a real or virtual object. For example, the object OBJ1 may be a tangible piece of material. The object OBJ1 may be a real object. The object OBJ1 may be e.g. in solid, liquid, or gaseous form. The object OBJ1 may comprise a sample. The object OBJ1 may a combination of a cuvette and a chemical substance contained in the cuvette. The object OBJ1 may be e.g. a plant (e.g. tree or a flower), a combustion flame, or an oil spill floating on water. The object may be e.g. the sun or a star observed through a layer of absorbing gas. The object OBJ1 may be a display screen, which emits or reflects light of an image. The object OBJ1 may be an optical image formed by another optical device. The object OBJ1 may also be called as a target.

The light LB1 may also be provided e.g. directly from a light source, by reflecting light obtained from a light source, by transmitting light obtained from a light source. The light source may comprise e.g. an incandescent lamp, a blackbody radiator, an infrared light emitting glow-bar, a tungsten halogen lamp, a fluorescent lamp, or a light emitting diode.

The mirror gap $d_{FP}$ of the interferometer 100 may be varied according to the control signal $S_d$. For example, the mirror gap $d_{FP}$ may be adjusted by converting the control signal $S_d$ into driving voltage, which is applied to the actuator 140 of the interferometer 100. Alternatively, the mirror gap $d_{FP}$ may be monitored e.g. by a capacitive sensor, which may provide the control signal $S_d$.

The spectrometer 500 may comprise a control unit CNT1. The control unit may comprise one or more data processors. The control unit CNT1 may be arranged to provide a control signal $S_d$ for controlling the mirror spacing $d_{FP}$ of the interferometer 100. For example, the spectrometer 500 may comprise a driving unit, which may be arranged to convert a digital control signal $S_d$ into a voltage signal $V_{ab}$. The voltage signal $V_{ab}$ may be coupled to a piezoelectric actuator or to en electrostatic actuator in order to adjust the mirror gap $d_{FP}$ (Fig. 10). The control signal $S_d$ may be indicative of the mirror gap $d_{FP}$. In an embodiment, the control signal $S_d$ may be proportional to the voltage signal $V_{ab}$ coupled to the actuator. The driving unit may convert a digital signal $S_d$ into an analog signal suitable for driving the actuator.

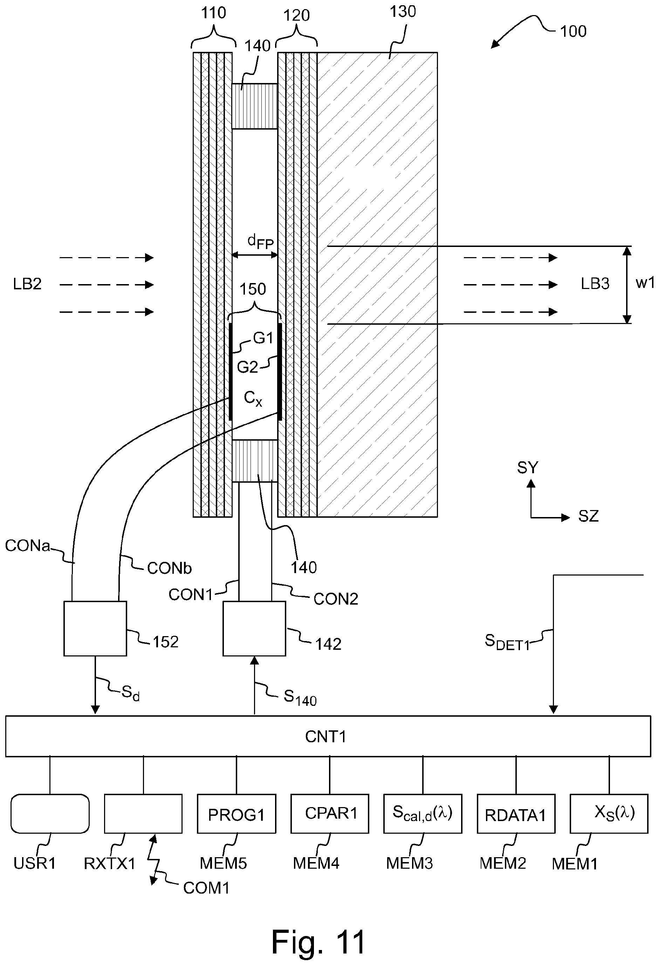

The control signal $S_d$ may also be a sensor signal. The interferometer may comprise e.g. a capacitive sensor for monitoring the mirror gap $d_{FP}$ (Fig. 11). The capacitive sensor may be arranged to provide the control signal $S_d$ by monitoring the mirror gap $d_{FP}$. The control signal $S_d$ may be used as a feedback signal indicative of the mirror spacing $d_{FP}$.

The spectrometer 500 may optionally comprise light concentrating optics 300 for concentrating light into the detector DET1. The optics 300 may comprise e.g. one or more lenses and/or one or more reflective surfaces (e.g. a paraboloid reflector). The optics 300 may be positioned before the interferometer 100. The optics 300 may be positioned after the interferometer 100 (i.e. between the interferometer 100 and the detector DET1). One or more components of the optics 300 may be positioned before the interferometer 300, and one or more components of the optics 300 may be positioned after the interferometer.

The detector DET1 may be arranged to provide a detector signal $S_{DET1}$. The detector signal $S_{DET1}$ may be indicative of the intensity $I_3$ of light LB3 impinging on the detector DET1. The detector DET1 may convert the intensity $I_3$ of light LB3 impinging on the detector DET1 into a detector signal value $S_{DET1}$.

The detector DET1 may be sensitive e.g. in the ultraviolet, visible and/or infrared region. The spectrometer 500 may be arranged to measure spectral intensities e.g. in the ultraviolet, visible and/or infrared region. The detector DET1 may be selected according to the detection range of the spectrometer 500. For example, the detector may comprise e.g. a silicon photodiode. The detector may comprise a P-N junction. The detector may be a pyroelectric detector. The detector may be a bolometer. The detector may comprise a thermocouple. The detector may comprise a thermopile. The detector may be an Indium gallium arsenide (InGaAs) photodiode. The detector may be a germanium photodiode. The detector may be a photoconductive lead selenide (PbSe) detector. The detector may be a photoconductive Indium antimonide (InSb) detector. The detector may be a photovoltaic Indium arsenide (InAs) detector. The detector may be a photovoltaic Platinum silicide (PtSi) detector. The detector may be an Indium antimonide (InSb) photodiode. The detector may be a photoconductive Mercury cadmium telluride (MCT, HgCdTe) detector. The detector may be a photoconductive Mercury zinc telluride (MZT, HgZnTe) detector. The detector may be a pyroelectric Lithium tantalate (LiTaO3) detector. The detector may be a pyroelectric Triglycine sulfate (TGS and DTGS) detector. The detector DET1 may be an imaging detector or a non-imaging detector. The detector may comprise one or more pixels of a CMOS detector. The detector may comprise one or more pixels of a CCD detector.

The spectrometer 500 may comprise a memory MEM4 for storing intensity calibration data CPAR1. One or more intensity values $I_1$ of the light LB1 may be determined from the detector signals $S_{DET1}$ by using the intensity calibration data CPAR1. The intensity calibration data CPAR1 may comprise e.g. one or more parameters of a regression function, which allows determining intensity values $I_1$ of the light LB1 from the detector signal values $S_{DET1}$.

Spectral calibration data may determine a relation between values of the control signal $S_d$ and spectral positions $\lambda$. A calibration function $\lambda_{cal}(S_d)$ may determine a relation for obtaining spectral positions $\lambda$ from values of the control signal $S_d$. Spectral calibration data may comprise parameters of a function $\lambda_{cal}(S_d)$, which gives spectral position $\lambda$ as the function of the control signal $S_d$.

Spectral calibration data $S_{d,cal}(\lambda)$ may determine a relation for obtaining values of the control signal $S_d$ from spectral positions $\lambda$. Spectral calibration data may comprise parameters of a function $S_{d,cal}(\lambda)$ which gives control signal $S_d$ as the function of the spectral position $\lambda$.

Each determined intensity value $I_1$ may be associated with a value of the control signal $S_d$, and the determined intensity value $I_1$ may be associated with a spectral position $\lambda$ based on said control signal value $S_d$ and spectral calibration data.

Each measured detector signal value $S_{DET1}$ may be associated with a value of the control signal $S_d$, and the detector signal value $S_{DET1}$ may be associated with a spectral position $\lambda$ based on the control signal value $S_d$ and spectral calibration data.

The spectrometer 500 may comprise a memory MEM3 for storing spectral calibration data. The spectral calibration data $\lambda_{cal}(S_d)$ may comprise e.g. one or more parameters of a regression function, which allows determining the relationship between control signal values $S_d$ and spectral positions $\lambda$. The spectrometer 500 may be arranged to determine spectral positions $\lambda$ from control signal values $S_d$ by using the spectral calibration data. The spectrometer 500 may comprise a memory MEM5 for storing a computer program PROG1. The computer program PROG1 may be configured, when executed by one or more data processors (e.g. CNT1), to determine spectral positions $\lambda$ from control signal values $S_d$ by using the spectral calibration data.

The spectrometer 500 may be arranged to obtain detector signal values $S_{DET1}$ from the detector DET1, and to determine intensity values $I_1$ from the detector signal values $S_{DET1}$ by using the intensity calibration data CPAR1. The computer program PROG1 may be configured, when executed by one or more data processors (e.g. CNT1), to obtain detector signal values $S_{DET1}$ from the detector DET1, and to determine intensity values $I_1$ from the detector signal values $S_{DET1}$ by using the intensity calibration data CPAR1.

The spectrometer 500 may optionally comprise a memory MEM1 for storing spectral data $X_S(\lambda)$. The spectral data $X_S(\lambda)$ may comprise e.g. intensity values $I_1$ determined as a function $I_1(\lambda)$ of the spectral position $\lambda$. The spectral data $X_S(\lambda)$ may comprise a calibrated measured spectrum $I_1(\lambda)$. The spectral data $X_S(\lambda)$ may comprise e.g. detector signal values $S_{DET1}$ determined as a function $S_{DET1}(\lambda)$ of the spectral position $\lambda$.

The spectrometer 500 may optionally comprise a user interface USR1 e.g. for displaying information and/or for receiving commands. The user interface USR1 may comprise e.g. a display, a keypad and/or a touch screen.

The spectrometer 500 may optionally comprise a communication unit RXTX1. The communication unit RXTX1 may transmit and/or receive a signal COM1 e.g. in order to receive commands, to receive calibration data, and/or to send spectral data. The communication unit RXTX1 may be capable of wired and/or wireless communication. For example, the communication unit RXTX1 may be capable of communicating with a local wireless network (WLAN), with the Internet and/or with a mobile telephone network.

The spectrometer 500 may be implemented as a single physical unit or as a combination of separate units. In an embodiment, the interferometer 100, and the units CNT1, MEM1, MEM3, MEM4, MEM5, USR1, RXTX1 may be implemented in the same housing. In an embodiment, the spectrometer 500 may be arranged to communicate detector signals $S_{DET1}$ and control signals $S_d$ with a remote data processing unit, e.g. with a remote server. Spectral positions $\lambda$ may be determined from the control signals $S_d$ by the remote data processing unit.

The spectrometer 500 may optionally comprise one or more optical cut-off filters 60 to limit the spectral response of the detector DET1. The filters 60 may define the detection band of the spectrometer 500. The filters 60 may be positioned before and/or after the interferometer 100.

The spectrometer 500 may optionally comprise e.g. a lens and/or an aperture 230, which is arranged to limit the divergence of the light LB3 transmitted through the interferometer 100 to the detector DET1, in order to provide a narrow bandwidth $\Delta\lambda_{FP}$ of the transmission peak $P_{FP,k}$. For example, the divergence of the light LB3 may be limited to be e.g. smaller than or equal to 10 degrees. When using light concentrating optics 300, the divergence of light LB3 contributing to the spectral measurement may also be limited by the dimensions of the detector DET1.

SX, SY and SZ denote orthogonal directions. The light LB2 may propagate substantially in the direction SZ. The mirrors 110, 120 of the interferometer may be substantially perpendicular to the direction SZ. The directions SZ and SY are shown in Fig. 1. The direction SX is perpendicular to the plane of drawing of Fig. 1.

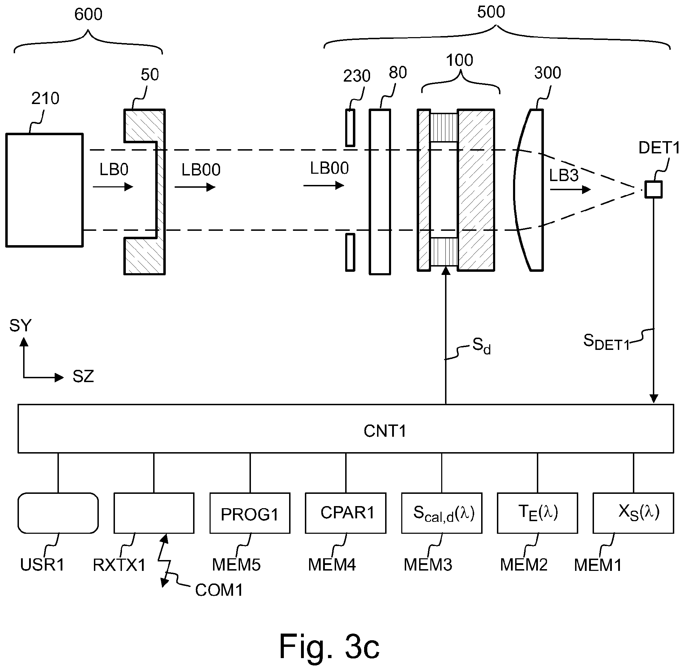

The spectrometer of Fig. 1 comprises a Fabry-Perot etalon 50 for determining and/or verifying the spectral scale of the interferometer. For example, the system of Fig. 3c, 5, 7, or 9 may comprise the spectrometer of Fig.1.

The Fabry-Perot etalon 50 may be, for example, formed using silicon on insulator (SOI) technology. The Fabry-Perot etalon 50 and the Fabry-Perot interferometer 100 may be, for example, formed using micro-electromechanical system (MEMS) technology. Typically, the Fabry-Perot etalon 50 is configured such that the specific wavelengths of transmission peaks of the etalon 50 and the spectral resolution of the system are synchronized. Thus, adjacent transmission peaks can be located in order to unambiguously distinguish the peaks. According to certain embodiments, the transmitted signal power in the blocking bands may be, for example, in the range between 1 % and 30 % of the original signal power.

Fig. 2 shows, by way of example, the spectral transmittance $T_{FP}(\lambda)$ of a Fabry-Perot interferometer 100, and the spectrum $B(\lambda)$ of light LB1 received from an object OBJ1. The spectral transmittance $T_{FP}(\lambda)$ of the interferometer 100 may have a plurality of transmission peaks $PF_{P,k-1}$, $P_{FP,k}$, $P_{FP,k+1}$, ... at respective spectral positions $\lambda_{FP,k-1}$, $\lambda_{FP,k}$, $\lambda_{FP,k+1}$. The spectrometer 500 may be arranged to detect light LB3 transmitted by a predetermined peak $P_{FP,k}$. The spectral position $X_{FP,k}$ of the transmission peak $P_{FP,k}$ may be adjusted by changing the mirror gap $d_{FP}$.

The spectrometer 500 may comprise one or more cut-off filters 60 to define a detection band $\Delta\lambda_{PB}$ of the spectrometer 500. The spectrometer 500 may be arranged to operate such that the spectrometer 500 is substantially insensitive to spectral components, whose wavelengths are outside a detection range $\Delta\lambda_{PB}$. The detection range $\Delta\lambda_{PB}$ may be defined e.g. by a bandpass or cut-off filter 60, which rejects wavelengths which are shorter than a first cut off value $\lambda_{CUT1}$ and longer than a second cut off value $\lambda_{CUT2}$. The filter unit 60 may be implemented by using one or more optical filters. For example, the filter unit 60 may be implemented by stacking two or more cut-off filters. The filters 60 may block wavelengths outside the detection band $\Delta\lambda_{PB}$ from reaching the detector DET1. A cut-off filter 60 may prevent spectral components at wavelengths $\lambda$ shorter than a first cut-off limit $X_{CUT1}$ from impinging on the detector DET1. A cut-off filter 60 may prevent spectral components at wavelengths $\lambda$ longer than a second cut-off limit $\lambda_{CUT2}$ from impinging on the detector DET1. The cut-off limits $\lambda_{CUT1}$, $\lambda_{CUT2}$ may be selected such that only spectral components within the detection range $\Delta\lambda_{PB}$ propagate to the detector DET1, depending on the spectral position $\lambda_{FP,k}$ of the transmission peak $P_{FP,k}$ of the interferometer 100. The cut-off limits $\lambda_{CUT1}$, $\lambda_{CUT2}$ may be selected such that spectral components overlapping the other transmission peaks $\lambda_{FP,k-1}$, $\lambda_{FP,k+1}$ do not propagate to the detector DET1. Adjacent peaks $P_{FP,k}$, $P_{FP,k+1}$ of the interferometer 100 are separated by the free spectral range $\Delta\lambda_{FSR,FP}$. The cut-off limits $\lambda_{CUT1}$, $\lambda_{CUT2}$ may be selected such that the detection range $\Delta\lambda_{PB}$ of the spectrometer 500 is narrower than the free spectral range $\Delta\lambda_{FSR,FP}$. Wavelengths outside the detection range $\Delta\lambda_{PB}$ may also be rejected by utilizing spectral selectivity of the detector DET1 and/or another optical component of the spectrometer. The filters 60 may be omitted e.g. when the detector DET1 is not sensitive to light outside the range refined by the cut-off limits $\lambda_{CUT1}$, $\lambda_{CUT2}$. The filters 60 may be omitted when the input light LB1 does not contain spectral components at wavelengths outside the range defined by the cut-off limits $\lambda_{CUT1}$, $\lambda_{CUT2}$.

$I_2(\lambda)$ may denote spectral intensity of light LB2 impinging on the interferometer 100, and $I_3(\lambda)$ may denote spectral intensity of light LB3 transmitted through the interferometer 100. The spectral transmittance $T_{FP}(\lambda)$ means the ratio $I_3(\lambda)/I_2(\lambda)$.

The lowermost curve of Fig. 2 shows an input spectrum $B(\lambda)$. The input spectrum $B(\lambda)$ may also be called as the spectral intensity distribution $I_1(\lambda)$ of the input light LB1. The spectrum $B(\lambda)$ may have a maximum value $B_{MAX}$. The spectral transmittance of the peak $P_{FP,k}$ may have a maximum value $T_{FP,MAX}$. The maximum value $B_{MAX}$ of the input spectrum $B(\lambda)$ may be attained e.g. at a spectral position $\lambda_{A1}$.

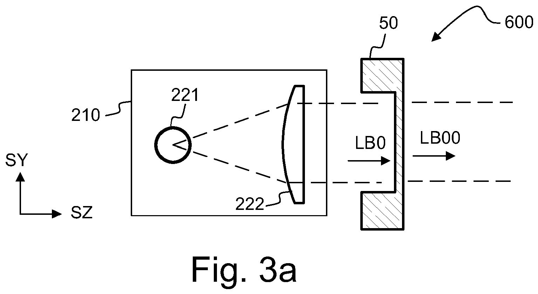

Referring to Fig. 3a, a light source unit 210 and a Fabry-Perot etalon 50 may together form a calibration light unit 600, which may be arranged to provide calibration light LB00.

The light source unit 210 may comprise a light source 221, and optionally a light-directing element 222. The light source 221 may comprise e.g. an incandescent lamp, a blackbody radiator, an infrared light emitting glow-bar, a tungsten halogen lamp, a fluorescent lamp, or a light emitting diode. The light-directing element 222 may comprise e.g. a lens or a paraboloid reflector. The light source unit 210 may be arranged provide illuminating light LB0. The Fabry Perot etalon 50 may be arranged to provide filtered light LB00 by filtering the illuminating light LB0. The illuminating light LB0 may have a broad spectrum, and the filtered light LB00 may have a comb-like spectral intensity distribution $I_{00}(\lambda)$, corresponding to the spectral transmittance $T_E(\lambda)$ of the etalon 50.

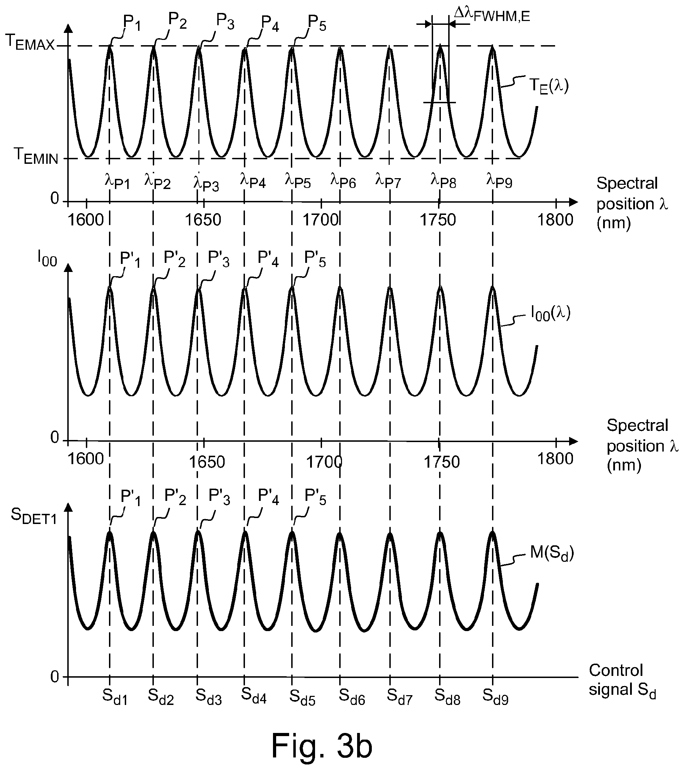

Fig. 3b shows how the spectral peaks of the calibration light LB00 may be formed by using the etalon 50.

The uppermost curve of Fig. 3b shows, by way of example, the spectral transmittance $T_E(\lambda)$ of the etalon 50. The second curve from the top shows a spectrum of the calibration light LB00. The lowermost curve shows a measured spectral intensity distribution $M(S_d)$ of the calibration light LB00. $T_{EMAX}$ denotes the maximum value of spectral transmittance $T_E(\lambda)$. $T_{EMIN}$ denotes the minimum value of spectral transmittance $T_E(\lambda)$.

The spectral transmittance $T_E(\lambda)$ is equal to the relative fraction of incident light at a specified wavelength that passes through the etalon 50. When generating calibration light LB00 by filtering with the etalon 50, the spectral transmittance $T_E(\lambda)$ may be equal to the ratio $I_{00}(\lambda)/I_0(\lambda)$, where $I_0(\lambda)$ denotes the spectral intensity of the illuminating light LB0, and $I_{00}(\lambda)$ denotes the spectral intensity of the filtered light LB00.

The spectral transmittance $T_E(\lambda)$ of the etalon 50 comprises a plurality of transmittance peaks $P_1$, $P_2$, $P_3$, ... Each transmittance peak $P_1$, $P_2$, $P_3$, ... may have a peak wavelength $\lambda_{P1}$, $\lambda_{P2}$, $\lambda_{P3}$, ... The etalon 50 may have a plurality of adjacent transmission peaks P1, P2, P3,... at the wavelengths $\lambda_{P1}$, $\lambda_{P2}$, $\lambda_{P3}$, ... The detection range $\Delta\lambda_{PB}$ of the spectrometer 500 may comprise e.g. three or more transmission peaks P1, P2, P3,...

The transmission peaks P1, P2, P3 may have a spectral width $\Delta\lambda_{FWHM,E}$. The acronym FWHM means full width at half maximum.

Referring to the second curve from the top, the etalon 50 forms a plurality of filtered spectral peaks $P'_1$, $P'_2$, $P'_3$, $P'_4$, $P'_5$, ... by filtering illuminating light LB0 such that a first filtered peak $P'_1$ corresponds to a first transmittance peak $P_1$ of the etalon 50, and a second filtered peak $P'_2$ corresponds to a second transmittance peak $P_1$ of the etalon 50. The spectrum $I_{00}(\lambda)$ of the calibration light LB00 may have a plurality of filtered spectral peaks $P'_1$, $P'_2$, $P'_3$, $P'_4$, $P'_5$, ... The spectral positions of the filtered spectral peaks $P'_1$, $P'_2$, $P'_3$, $P'_4$, $P'_5$, ... may substantially coincide with the spectral positions $\lambda_{P1}$, $\lambda_{P2}$, $\lambda_{P3}$, ... of transmittance peaks of the etalon 50.

Referring to the lowermost curve of Fig. 3b, the interferometer 100 may be arranged to provide a measured distribution $M(S_d)$. The distribution $M(S_d)$ may contain a plurality of data points such that each data point contains a measured detector signal value $S_{DET1}$ and a corresponding control signal value $S_d$. The distribution $M(S_d)$ may specify measured detector signal values $S_{DET1}$ as a function of the control signal $S_d$. The distribution $M(S_d)$ may be called e.g. as the measured detector signal distribution. The detector signal $S_{DET1}$ may be indicative of the spectral intensity. Consequently, the distribution $M(S_d)$ may also be called as the measured spectral intensity distribution. The distribution $M(S_d)$ may be provided by recording detector signal values as the function of the control signal $S_d$.

The spectral intensity distribution $M(S_d)$ may be measured by scanning the interferometer 100 over the filtered spectral peaks $P'_1$, $P'_2$, $P'_3$, $P'_4$, $P'_5$, ... The spectral intensity distribution $M(S_d)$ may be measured by varying the mirror gap $d_{FP}$ and by recording the detector signal $S_{DET1}$ as the function of the control signal $S_d$. The spectral intensity distribution $M(S_d)$ may be measured by varying the mirror gap $d_{FP}$ of the Fabry-Perot interferometer 100 according to a control signal $S_d$, or by varying the mirror gap $d_{FP}$ of the Fabry-Perot interferometer 100 and providing the control signal $S_d$ by monitoring the mirror gap.

Spectral calibration data for the interferometer 100 is determined by matching the measured spectral intensity distribution $M(S_d)$ with the spectral transmittance $T_E(\lambda)$ of the etalon (50).

A first peak P1 of the spectral transmittance $T_E(\lambda)$ may have a spectral position $\lambda_{P1}$, and a second peak P2 of the spectral transmittance $T_E(\lambda)$ may have a spectral position $\lambda_{P2}$. A first filtered peak $P'_1$ of the distribution $M(S_d)$ corresponds to the first transmittance peak $P_1$ of the etalon 50, and a second filtered peak $P'_2$ of the distribution $M(S_d)$ corresponds to the second transmittance peak $P_2$ of the etalon 50. The first filtered peak $P'_1$ of the measured distribution $M(S_d)$ may coincide with a first control signal value $S_{d1}$, and the second filtered peak $P'_2$ of the measured distribution $M(S_d)$ may coincide with a second control signal value $S_{d2}$. Consequently, the first control signal value $S_{d1}$ may be associated with the spectral position $\lambda_{P1}$, and the second control signal value $S_{d2}$ may be associated with the second control signal value $S_{d2}$.

Referring to Fig. 3c, the calibration light LB00 may be coupled into the spectrometer 500 in order to determine and/or check spectral calibration data. The etalon 50 may provide filtered calibration light LB00 by filtering input light LB0. The filtered light LB00 may comprise a plurality of filtered peaks corresponding to the spectral transmittance of the etalon 50. The spectral scale of the interferometer 100 may be verified and/or determined by using the interferometer 100 for measuring a spectral intensity distribution of the filtered peaks. The spectral intensity distribution of the filtered peaks may be measured by scanning the transmission peak $P_{FP,k}$ of the interferometer 100 over the spectrum $I_{00}(\lambda)$ of the calibration light LB00. The spectral scale of the interferometer 100 may be determined by matching the measured spectral intensity distribution $M(S_d)$ with the spectral transmittance of the etalon 50.

The spectral intensity distribution $M(S_d)$ may be measured by scanning the interferometer 100. During the scanning, the mirror gap $d_{FP}$ may be varied according to the control signal $S_d$, or the spectrometer may provide a control signal $S_d$ by monitoring the mirror gap $d_{FP}$. The spectral intensity distribution $M(S_d)$ may be measured by varying the mirror gap $d_{FP}$ and by recording the detector signal $S_{DET1}$ as the function of the control signal $S_d$.

The spectrometer 500 may comprise a memory MEM2 for storing information about the spectral transmittance $T_E(\lambda)$ of the etalon 50. For example, the memory MEM2 may comprise data, which numerically defines the spectral transmittance function $T_E(\lambda)$. For example, the memory MEM2 may comprise data, which specifies the spectral positions $\lambda_{P1}$, $\lambda_{P2}$, $\lambda_{P3}$, ... of the transmittance peaks of the etalon 50.

The combined transmittance of the Fabry-Perot etalon 50 and the Fabry-Perot interferometer 100 may be proportional to the intensity $I_3$ of light LB3 impinging on the detector DET1. The combined transmittance may be monitored by monitoring the intensity $I_3$ of light LB3 impinging on the detector DET1. The detector signal $S_{DET1}$ of the detector DET1 may be indicative of the intensity $I_3$ of light LB3 impinging on the detector DET1. The mirror gap $d_{FP}$ may be varied and the combined transmittance may be monitored in order to determine a first control signal value $S_{d1}$ associated with a first mirror gap $d_{FP}$ when the transmission peak $P_{FP,k}$ of the interferometer 100 substantially coincides with a first filtered spectral peak $P'_1$ of the calibration light LB00. The mirror gap $d_{FP}$ may be varied and the combined transmittance may be monitored in order to determine a second control signal value $S_{d2}$ associated with a second mirror gap $d_{FP}$ when the transmission peak $P_{FP,k}$ of the interferometer 100 substantially coincides with a second filtered spectral peak $P_2$ of the calibration light LB00.

The calibration function $\lambda_{cal}(S_d)$ and/or $S_{d,cal}(\lambda)$ is determined by matching the measured distribution $M(S_d)$ with the transmittance function $T_E(\lambda)$, wherein the matching may comprise associating control signal values with spectral positions. The first filtered spectral peak $P'_1$ has a spectral position $\lambda_{P1}$, and the second filtered spectral peak $P'_2$ has a spectral position $\lambda_{P2}$. The spectral position $\lambda_{P1}$ and the first control signal value $S_{d1}$ may be associated to form a first pair $(\lambda_{P1}, S_{d1})$. The spectral position $\lambda_{P2}$ and the second control signal value $S_{d2}$ may be associated to form a second pair $(\lambda_{P2}, S_{d2})$. Spectral calibration data $\lambda_{cal}(S_d)$ and/or $S_{d,cal}(\lambda)$ may be determined by using the first pair $(\lambda_{P1}, S_{d1})$ and the second pair $(\lambda_{P2}, S_{d2})$. Additional pairs $(\lambda_{P3}, S_{d3})$, $(\lambda_{P4}, S_{d4})$, ... may be formed based on the spectral positions of the other filtered spectral peaks. The spectral calibration data $\lambda_{cal}(S_d)$ of the interferometer (100) may be determined also by using the additional pairs $(\lambda_{P3}, S_{d3})$, $(\lambda_{P4}, S_{d4})$, ...

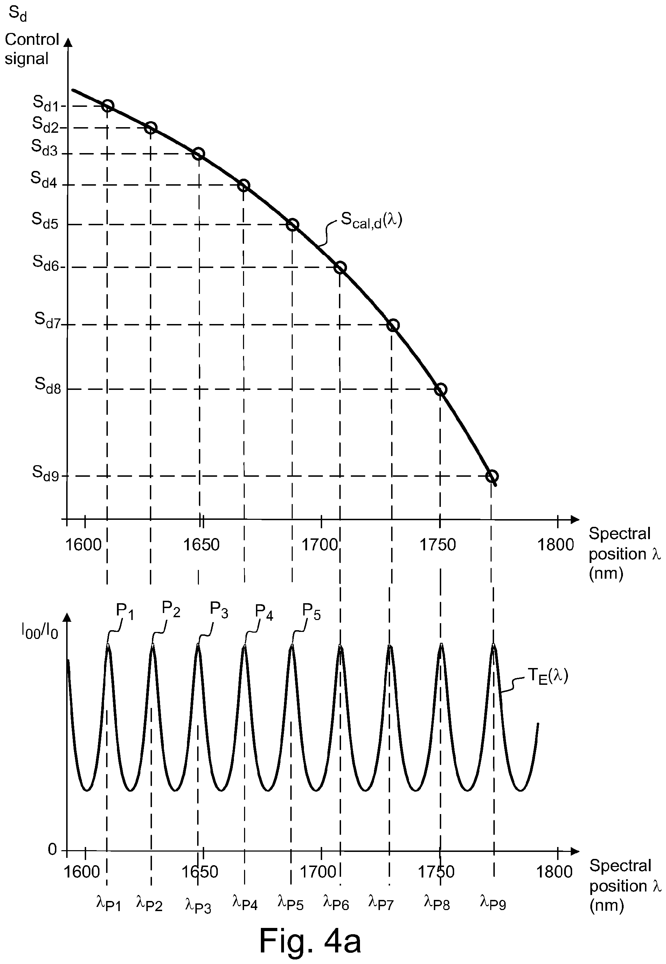

Fig. 4a shows, by way of example, calibration data $S_{cal,d}(\lambda)$, which defines a relation between spectral positions $\lambda$ and corresponding control signal values Sd.

A first control signal value $S_{d1}$ may be associated with a first mirror gap $d_{FP}$ in a situation where the spectral position of the transmission peak $P_{FP,k}$ of the interferometer 100 coincides with the spectral position $\lambda_{P1}$ of a first transmittance peak P1 of the etalon 50. A second control signal value $S_{d2}$ may be associated with a second mirror gap $d_{FP}$ in a situation where the spectral position of the transmission peak $P_{FP,k}$ of the interferometer 100 coincides with the spectral position $\lambda_{P2}$ of a second transmittance peak P2 of the etalon 50. A third control signal value $S_{d3}$ may be associated with a third mirror gap $d_{FP}$ in a situation where the spectral position of the transmission peak $P_{FP,k}$ of the interferometer 100 coincides with the spectral position $\lambda_{P3}$ of a third transmittance peak P3 of the etalon 50. Values $(S_{d4}, \lambda_{P4})$, $(S_{d5}, \lambda_{P5})$, $(S_{d6}, \lambda_{P6})$, $(S_{d7}, \lambda_{P7})$, $(S_{d8}, \lambda_{P8})$, $(S_{d9}, \lambda_{P9})$ may be paired, respectively.

The relationship between the spectral positions $\lambda$ and the corresponding control signal values $S_d(\lambda)$ may be expressed e.g. by a calibration function $S_{cal,d}(\lambda)$. The relationship between the control signal values $S_d(\lambda)$ and the corresponding spectral positions $\lambda$ may be expressed e.g. by a calibration function $\lambda_{cal}(S_d)$.

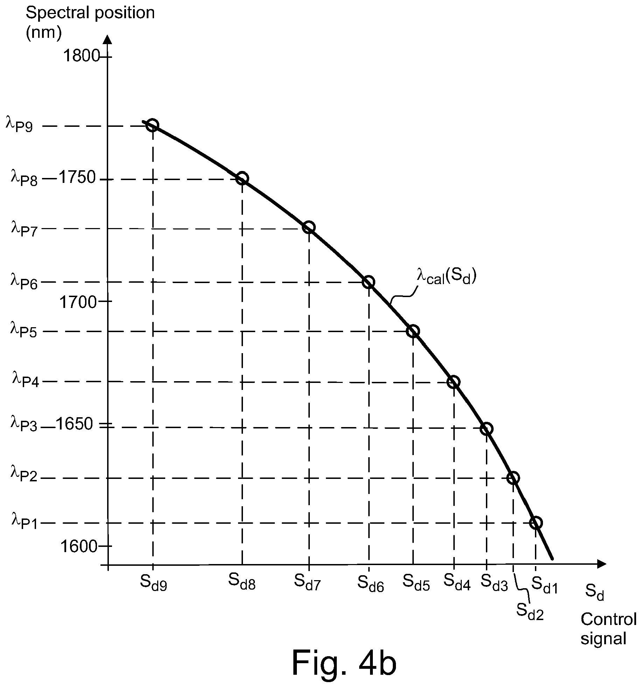

Fig. 4b shows, by way of example, a calibration function $\lambda_{cal}(S_d)$. The calibration function $\lambda_{cal}(S_d)$ may give the spectral position $\lambda$ as the function of the control signal value $S_d$. The calibration function $S_{d,cal}(\lambda)$ may give the control signal value $S_d$ as the function of the spectral position $\lambda$. The calibration function $\lambda_{cal}(S_d)$ may be the inverse function of the calibration function $S_{d,cal}(\lambda)$. When the calibration function $S_{d,cal}(\lambda)$ has been determined, the calibration function $\lambda_{cal}(S_d)$ may be subsequently determined from the calibration function $S_{d,cal}(\lambda)$. If the calibration function $\lambda_{cal}(S_d)$ has been determined, the calibration function $S_{d,cal}(\lambda)$ may be subsequently determined from the calibration function $\lambda_{cal}(S_d)$.

The calibration function $\lambda_{cal}(S_d)$ and/or $S_{d,cal}(\lambda)$ may be determined e.g. by fitting a regression function to a plurality of data points $(\lambda_i, S_{d,i})$ wherein the spectral positions of said data points $(\lambda_1, S_{d,i})$ may substantially coincide with the spectral positions $\lambda_{P1}$, $\lambda_{P2}$, $\lambda_{P3}$, ... of the transmission peaks P1, P2, P3, ... of the etalon 50. Spectral calibration data $\lambda_{cal}(S_d)$ and/or $S_{d,cal}(\lambda)$ may comprise e.g. a regression function, which may be fitted to the data pairs $(\lambda_{P1}, S_{d1})$, $(\lambda_{P2}, S_{d2})$, $(\lambda_{P3}, S_{d3})$, $(\lambda_{P4}, S_{d4})$,.. The calibration function $S_{d,cal}(\lambda)$ may be e.g. a polynomial function. The calibration function $S_{d,cal}(\lambda)$ may be e.g. a third order polynomial function.

The calibration function $\lambda_{cal}(S_d)$ and/or $S_{d,cal}(\lambda)$ or a look-up-table corresponding to the calibration function $\lambda_{cal}(S_d)$ and/or $S_{d,cal}(\lambda)$ may be stored in a memory MEM3 of the spectrometer 500 and/or in a memory of a database server. When needed, the calibration data may be retrieved from the memory. The calibration data may be used for determining the spectral scale for a measured spectrum. The calibration data may be verified and/or modified. Modified calibration data may be optionally stored in a memory MEM3 of the spectrometer 500 and/or in a memory of a database server, again.

The transmittance $T_E(\lambda)$ of the etalon 50 may, in turn, be calibrated e.g. by using a monochromator, by using a Fourier transform infrared spectrometer and/or by comparing the transmittance $T_E(\lambda)$ with the spectral positions of emission lines of a calibration lamp (based on atomic line emission).

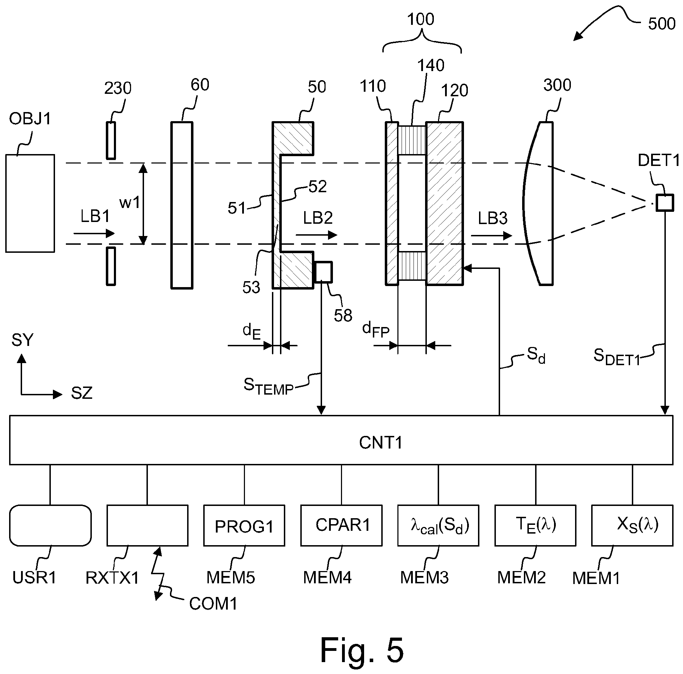

The spectral width $\Delta\lambda_{FWHM,E}$ of the transmittance peaks $P_1$, $P_2$, $P_3$ may depend on the reflectivity of the planar surfaces 51, 52, and on the mirror spacing $d_E$ of the etalon 50 (Fig. 5). The surfaces 51, 52 may be flat. The minimum transmittance of the etalon 50 may be determined by the reflectivity of the planar surfaces 51, 52. The reflectivity and the mirror spacing of the etalon 50 may be selected according to the detection range $\Delta\lambda_{PB}$ of the spectrometer 500 and/or according to the spectrum, which is to be measured by the spectrometer 500. The mirror spacing of the etalon 50 may be selected to provide a suitable number of transmittance peaks $P_1$, $P_2$, $P_3$,.. within the detection range $\Delta\lambda_{PB}$ of the spectrometer 500. The spectral widths $\Delta\lambda_{FWHM,E}$ of the transmittance peaks $P_1$, $P_2$, $P_3$, .. may be selected according to the spectral width $\Delta\lambda_{FWHM,FP}$ of the transmission peak $P_{FP}$ of the Fabry-Perot interferometer 100. The planar surfaces 51, 52 may be semi-reflective. The etalon 50 may comprise a substrate 53, which has the planar surfaces 51, 52. For example, the substrate 53 may consist of fused silica. For example, the substrate 53 may consist of monocrystalline silicon. For example, the substrate 53 may consist essentially of of fused silica. For example, the substrate 53 may consist essentially of monocrystalline silicon.

The planar surfaces 51, 52 of the etalon 50 may be optionally coated with semi-reflective coatings. The planar surfaces of the etalon 50 may be implemented by using semi-reflective coatings. The etalon 50 may comprise semi-reflective coatings. The reflectivity of the coatings may be selected to provide a suitable spectral width $\Delta\lambda_{FWHM,E}$. However, the etalon 50 may also be implemented without reflective coatings. The surfaces 51, 52 may operate as semi-reflective mirrors based on the difference between the refractive index of the substrate 53, and the refractive index of the surrounding gas.

Referring to Fig. 5, the spectrometer 500 may comprise the etalon 50, which may be arranged to provide filtered light LB2 by filtering input light LB1. In particular, the etalon 50 may be arranged to provide filtered light LB2 also during measuring the (unknown) spectrum $B(\lambda)$ of input light LB1 received from an object OBJ1. In an embodiment, the etalon 50 may be permanently positioned in the optical path of the spectrometer 500. The etalon 50 may be positioned e.g. between the object OBJ1 and the interferometer 100, or between the interferometer 100 and the detector DET1.

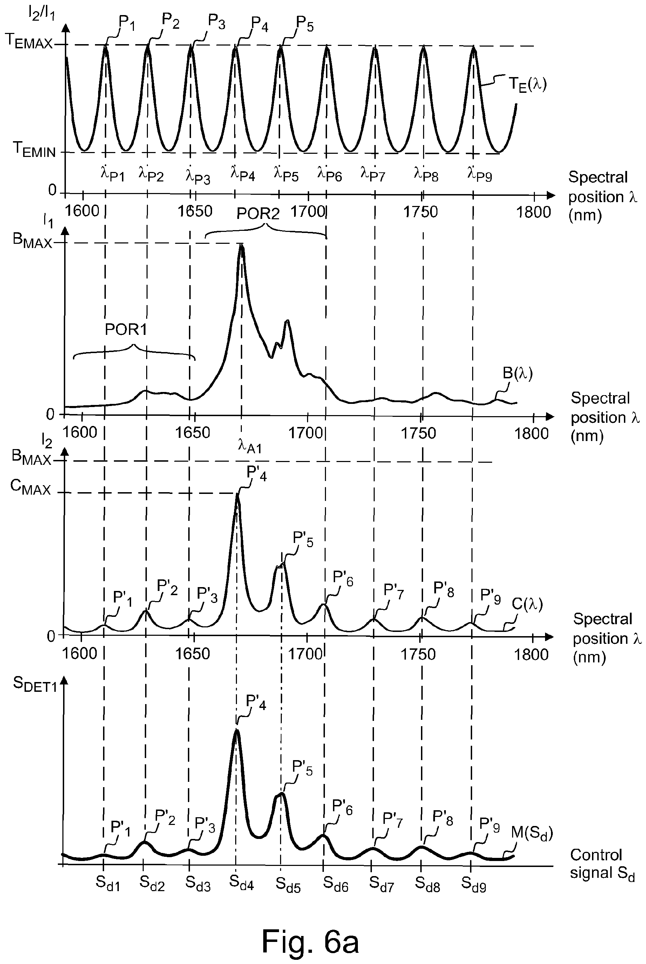

Fig.6a illustrates the effect of the etalon 50 on the spectrum of light transmitted through the etalon 50. Input light LB1 impinging on the etalon 50 may have an input spectrum $B(\lambda)$, and filtered light LB2 transmitted through the etalon 50 may have a filtered spectrum C(X).The etalon 50 may provide the filtered light LB2 by filtering the input light LB1. The filtered spectrum $C(\lambda)$ may be obtained by multiplying the input spectrum $B(\lambda)$ with the transmittance $T_E(\lambda)$ of the etalon 50:

$$C(\lambda) = T_E(\lambda) \cdot B(\lambda) \qquad\qquad (1)$$

The uppermost curve of Fig. 6a shows the spectral transmittance $T_E(\lambda)$ of the etalon 50. The transmittance $T_E(\lambda)$ may have a plurality of peaks P1, P2, P3 at accurately known wavelengths $\lambda_{P1}$, $\lambda_{P2}$, $\lambda_{P3}$, ...

The peaks P1, P2, P3, ... may have, for example a maximum transmittance $T_{EMAX}$. Between adjacent peaks P1, P2, P3, ... a minimum transmittance peak with an intensity ratio $T_{EMIN}$ is located at accurately known wavelengths. According to certain embodiments, the minimum transmittance peaks and the maximum transmittance peaks of the etalon 50 can be used for determining spectral calibration data $\lambda_{cal}(S_d)$, $S_{d,cal}(\lambda)$ of a Fabry-Perot interferometer 100.

The second curve from the top of Fig. 6a shows an input spectrum $B(\lambda)$ of input light LB1 received from an object OBJ1. The light LB1 may be e.g. reflected from the object OBJ1, emitted by the object OBJ1, and/or transmitted through the object OBJ1. The input spectrum $B(\lambda)$ may have one or more moderately sloped portions POR1. The moderately sloped portion POR1 means a portion where the absolute value of the derivative $\partial B(\lambda)/\partial\lambda$ is smaller than or equal to a predetermined limit at each spectral position of said portion, and where the spectrum $B(\lambda)$ is greater than zero. The input spectrum $B(\lambda)$ may also have one or more steeply sloped portions POR2. The steeply sloped portion POR2 means a portion where the absolute value of the derivative $\partial B(\lambda)/\partial\lambda$ is higher than said predetermined limit. The moderately sloped portion POR1 may also be called e.g. as a substantially flat portion. The steeply sloped portion POR2 may also be called e.g. as a steep portion.

The third curve from the top of Fig. 6a shows a filtered spectrum $C(\lambda)$, which is formed by filtering the input spectrum $B(\lambda)$ with the etalon 50. The filtered spectrum $C(\lambda)$ may have a plurality of filtered peaks $P'_1$, $P'_2$, $P'_3$, ... at spectral positions $\lambda_{P'1}$, $\lambda_{P'2}$, $\lambda_{P'3}$, ... A filtered peak $P'_1$ may be formed by multiplying the input spectrum $B(\lambda)$ with the transmittance $T_E(\lambda)$ in the vicinity of the wavelength $\lambda_{P1}$. Each individual filtered peak $P'_1$, $P'_2$, $P'_3$,... may be formed by filtering the input spectrum $B(\lambda)$ with an individual transmission peak $P_1$, $P_2$, $P_3$,... The filtered spectrum may be expressed as a function $C(\lambda)$ of spectral position $\lambda$.

The maximum value of an individual filtered peak $P'_1$ may be attained when the control signal $S_d$ of the Fabry-Perot interferometer 100 is equal to a marker value $S_{d1}$. The marker value $S_{d1}$ of the filtered peak $P'_1$ may be determined

by scanning the Fabry-Perot interferometer 100 and by analyzing when the detector signal $S_{DET1}$ attains a local maximum. The marker value $S_{d1}$ of the filtered peak $P'_1$ may be determined by varying the control signal $S_d$, measuring the distribution $M(S_d)$ as a function of the control signal $S_d$, and by determining a control signal value $S_{d1}$ where the distribution $M(S_d)$ attains a local maximum.

Referring to the lowermost curve of Fig. 6a, a spectral intensity distribution $M(S_d)$ of the filtered light may be measured by scanning the Fabry-Perot interferometer 100. The measured spectral intensity distribution $M(S_d)$ may be formed as a convolution of the filtered spectrum $C(\lambda)$ with the transmittance $T_{FP}(\lambda)$ of the Fabry-Perot interferometer 100. The measured spectral intensity distribution $M(S_d)$ may be converted into a calibrated measured spectral intensity distribution $M(S_{d,cal}(\lambda))$ by using the spectral calibration data $\lambda_{cal}(S_d)$ and/or $S_{d,cal}(\lambda)$.

The filtered spectrum $C(\lambda)$ may attain a local maximum value at a peak wavelength $\lambda_{P1}$. The filtered spectrum $C(\lambda)$ may attain local maximum values at peak wavelengths $\lambda_{P1}$, $\lambda_{P2}$, $\lambda_{P3}$, ... The measured spectral intensity distribution $M(S_d)$ may attain a local maximum value when the control signal is equal to a marker value $S_{d1}$. The distribution $M(S_d)$ may attain local maximum values at marker values $S_{d1}$, $S_{d2}$, $S_{d3}$, ...

The calibration function $\lambda_{cal}(S_d)$ and/or $S_{d,cal}(\lambda)$ is determined by matching the distribution $M(S_d)$ with the transmittance function $T_E(\lambda)$. The calibration function $\lambda_{cal}(S_d)$ and/or $S_{d,cal}(\lambda)$ may be determined by using matching marker values $S_{d1}$, $S_{d2}$, $S_{d3}$, ... determined from the measured distribution $M(S_d)$, and by using the accurately known wavelengths $\lambda_{P1}$, $\lambda_{P2}$, $\lambda_{P3}$, ... of the transmittance peaks P1, P2, P3.

The spectral position $\lambda_{P1}$ of the transmission peak $P_1$ is accurately known, and the spectral position $\lambda_{P'1}$ of a filtered peak $P'_1$ of the filtered spectrum $C(\lambda)$ may substantially coincide with the spectral position $\lambda_{P1}$ of a transmission peak $P_1$ of the etalon 50 when the transmission peak $P_1$ is within a moderately sloped portion POR1 of the spectrum $B(\lambda)$. The calibration function $\lambda_{cal}(S_d)$ and/or $S_{d,cal}(\lambda)$ may be determined and/or checked based on the position of the filtered peak $P'_1$. In particular, the calibration function $\lambda_{cal}(S_d)$ and/or $S_{d,cal}(\lambda)$ may be determined and/or checked based on the marker signal value $S_{d1}$ associated with the filtered peak $P'_1$.

On the other hand, the spectral position of a filtered peak $P'_4$ of the filtered spectrum $C(\lambda)$ may substantially deviate from the spectral position $\lambda_{P4}$ of a transmission peak $P_4$ of the etalon 50 when the transmission peak $P_4$ is within a steeply sloped portion POR2. One or more marker values $S_{d4}$, $S_{d5}$ may be associated with filtered peaks $P'4$, $P'5$, which deviate from the spectral positions $\lambda_4$, $\lambda_5$ of the corresponding transmission peaks P4, P5, because the spectral positions $\lambda_4$, $\lambda_5$ are within a steeply sloped portion POR2 of the input spectrum $B(\lambda)$. One or more non-matching marker values $S_{d4}$, $S_{d5}$ may be omitted when determining and/or checking the calibration function $\lambda_{cal}(S_d)$ and/or $S_{d,cal}(\lambda)$.

The distribution $M(S_d)$ may comprise a plurality of filtered peaks $P'_1$, $P'_2$, $P'_3$, .... The shape of each filtered peak $P'_1$, $P'_2$, $P'_3$, ... may be compared with the shape of a transmittance peak P1, P2, P3 of the transmittance $T_E(\lambda)$ in order to determine whether the marker value $S_{d1}$ of the filtered peak $P'_1$ can be used for checking the spectral calibration. The shape of a filtered peak may correspond to the shape of a transmittance peak if the input spectrum is a slowly varying function of the wavelength.

The method may comprise determining whether a marker value $S_{d1}$ corresponds to a peak wavelength $\lambda_{P1}$, which is within a moderately sloped portion POR1 of the input spectrum $B(X)$. Said determining may be performed e.g. by determining an estimate $B_M(\lambda)$ of the input spectrum $B(\lambda)$, and checking whether the absolute value of the derivative $\partial B_M(\lambda)/\partial\lambda$ is smaller than or equal to a predetermined limit in the vicinity of a spectral position $\lambda_1$. A peak wavelength $\lambda_{P1}$ may be within a moderately sloped portion POR1 of the input spectrum $B(\lambda)$ if the absolute value of the derivative $\partial B_M(\lambda)/\partial\lambda$ is smaller than or equal to a predetermined limit b1 in the vicinity of the peak wavelength $\lambda_{P1}$.

Said estimate $B_M(\lambda)$ of the input spectrum $B(\lambda)$ may be calculated e.g. by providing a calibrated distribution $M(S_{cal,d}(\lambda))$ from the measured distribution $M(S_d)$, and by dividing the calibrated distribution $M(S_{cal,d}(\lambda))$ with the transmittance $T_E(\lambda)$ of the etalon 50:

$$B_M(\lambda) = k_{int} \cdot \frac{M(S_{cal,d}(\lambda))}{T_E(\lambda)} \qquad (2)$$

$k_{int}$ denotes an intensity calibration coefficient. $k_{int}$ may also depend on the wavelength. The intensity calibration data CPAR1 may comprise the calibration coefficient $k_{int}$.

A control signal value $S_d(\lambda_{P1})$ corresponding to the peak wavelength $\lambda_{P1}$ may be estimated by using the calibration function $S_{cal,d}(\lambda)$, or by using a preliminary calibration function $S_{cal,d}(\lambda)$.

$$S_d(\lambda_{P1}) \approx S_{cal,d}(\lambda_{P1}) \qquad (3)$$

The estimated control signal value $S_{cal,d}(\lambda_{P1})$ may be compared with the marker values $S_{d1}$, $S_{d2}$, $S_{d3}$, ... in order to determine whether the estimated control signal value $S_{cal,d}(\lambda_{P1})$ substantially coincides with any of the marker values $S_{d1}$, $S_{d2}$, $S_{d3}$, ... The estimated control signal value $S_{cal,d}(\lambda_{P1})$ may substantially coincide with a marker value $S_{d1}$ e.g. when the difference between the marker value $S_{d1}$ and the estimated control signal value $S_{cal,d}(\lambda_{P1})$ is smaller than or equal to a predetermined limit value $\Delta S_{LIM}$.

$$\left| S_{d1} - S_{cal,d}(\lambda_{d1}) \right| \leq \Delta S_{LIM} \qquad (4)$$

Each marker value $S_{d1}$, $S_{d2}$, $S_{d3}$, $S_{d4}$,... may be classified to be a matching value or a non-matching value. A marker value $S_{d1}$ may be classified to be a matching value if the marker value $S_{d1}$ corresponds to a peak wavelength $\lambda_{P1}$, which is within a moderately sloped portion POR1 of the input spectrum $B(\lambda)$, and if the marker value $S_{d1}$ substantially coincides with an estimated control signal value $S_{cal,d}(\lambda_{P1})$. A marker value $S_{d4}$ may be classified to be a non-matching value if the marker value $S_{d4}$ corresponds to a peak wavelength $\lambda_{P4}$, which is within a steeply sloped portion POR2 of the input spectrum $B(\lambda)$, and/or if the marker value $S_{d4}$ substantially deviates from all estimated control signal values $S_{cal,d}(\lambda_{P1})$, $S_{cal,d}(\lambda_{P2})$, $S_{cal,d}(\lambda_{P3})$, $S_{cal,d}(\lambda_{P4})$,... The matching marker values $S_{d1}$, $S_{d2}$, $S_{d3}$, ... may be used for checking and/or improving the accuracy of the calibration function $S_{cal,d}(\lambda)$.

Data pairs $(\lambda_{P1}, S_{d1})$, $(\lambda_{P2}, S_{d2})$, $(\lambda_P, S_{d3})$, ... for determining and/or checking the calibration function $\lambda_{cal}(S_d)$ and/or $S_{d,cal}(\lambda)$ may be obtained by:

- determining a plurality of marker values $S_{d1}$, $S_{d2}$, $S_{d3}$, ... from the measured distribution $M(S_d)$,
- classifying two or more marker values $S_{d1}$, $S_{d2}$, $S_{d3}$, ...as matching marker values $S_{d1}$, $S_{d2}$, $S_{d3}$, ..., and
- forming the data pairs $(\lambda_{P1}, S_{d1})$, $(\lambda_{P2}, S_{d2})$, $(\lambda_P, S_{d3})$ by associating each matching marker value $S_{d1}$, $S_{d2}$, $S_{d3}$, ... with an accurately known peak wavelength $\lambda_{P1}$, $\lambda_{P2}$, $\lambda_{P3}$, ... of a transmittance peak P1, P2, P3.

The accuracy of a calibration function $\lambda_{cal}(S_d)$ and/or $S_{d,cal}(\lambda)$ may be improved and/or checked by using the data pairs $(\lambda_{P1}, S_{d1})$, $(\lambda_{P2}, S_{d2})$, $(\lambda_P, S_{d3})$. A modified calibration function $\lambda_{cal}(S_d)$ and/or $S_{d,cal}(\lambda)$ may be determined by using the data pairs $(\lambda_{P1}, S_{d1})$, $(\lambda_{P2}, S_{d2})$, $(\lambda_P, S_{d3})$. The modified calibration function $\lambda_{cal}(S_d)$ and/or $S_{d,cal}(\lambda)$ may be slightly different from the preliminary calibration function. The modified calibration function $\lambda_{cal}(S_d)$ and/or $S_{d,cal}(\lambda)$ may be stored e.g. in a memory MEM3.

An improved estimate $B_M(\lambda$ for input spectrum $B(\lambda)$ may subsequently be determined by providing a calibrated distribution $M(S_{cal,d}(\lambda))$ from the measured distribution $M(S_d)$ by using the modified calibration function $S_{cal,d}(\lambda)$, and by dividing the calibrated distribution $M(S_{cal,d}(\lambda))$ with the transmittance $T_E(\lambda)$ of the etalon 50:

$$B_M(\lambda) = k_{int} \cdot \frac{M(S_{cal,d}(\lambda))}{T_E(\lambda)} \qquad (5)$$

The filtered spectrum $C(\lambda)$ of Fig. 6a may represent the spectrum of light transmitted through the etalon 50. The filtered spectrum $C(\lambda)$ may represent the spectrum of light transmitted through the etalon 50 in a situation where the etalon is positioned optically before the Fabry-Perot interferometer 100. However, the calibration function $\lambda_{cal}(S_d)$ and/or $S_{d,cal}(\lambda)$ may be determined and/or checked by using the data pairs $(\lambda_{P1}, S_{d1})$, $(\lambda_{P2}, S_{d2})$, $(\lambda_P, S_{d3})$ also when the etalon 50 is positioned optically after the interferometer 100.

The distribution $M(S_d)$ is measured by scanning the interferometer 100. Different peaks of the spectrum may be scanned at different times. The distribution $M(S_d)$ may represent a time-averaged spectrum of the filtered peaks provided by the etalon 50. The distribution $M(S_d)$ does not need to represent an instantaneous spectrum of light transmitted through the etalon 50.

Increasing the finesse of the etalon 50 may reduce the minimum spectral transmittance $T_{E,MIN}$ of the etalon 50. If the minimum spectral transmittance $T_{E,MIN}$ is very low, this may reduce accuracy of the intensity values and/or may cause loss of spectral data. The reflectance of the coatings of the etalon 50 may be selected such that the minimum spectral transmittance $T_{E,MIN}$ of the etalon 50 is lower than or equal to 90% of the maximum spectral transmittance $T_{E,MAX}$ of the etalon 50. The reflectance of the coatings of the etalon 50 may be selected such that the minimum spectral transmittance $T_{E,MIN}$ of the etalon 50 e.g. is in the range of 10% to 90% of the maximum spectral transmittance $T_{E,MAX}$ of the etalon 50.

In an embodiment, a first part of the input light LB1 may be coupled to the interferometer via the etalon 50, and a second part of the input light may be simultaneously coupled to the interferometer 100 without passing through the etalon. For example, the etalon 50 may cover less than 100% of the cross-section of the aperture of the interferometer 100. For example, the input light LB1 may be divided into a first part and a second part by using a beam splitter, wherein the first part may be coupled to the interferometer 100 through the etalon 50, and the second part may be coupled to the interferometer 100 without passing through the etalon 50. The spectrometer 500 may comprise e.g. optical fibers, prisms and/or mirrors for guiding the first part and/or the second part. Consequently, the spectrum $C(\lambda)$ may have narrow well-defined filtered peaks $P'_1$, $P'_2$, $P'_3$,.. without causing significant loss of data between the peaks of the spectrum $C(\lambda)$. Consequently, the spectrum $C(\lambda)$ may have narrow well-defined filtered peaks $P'_1$, $P'_2$, $P'_3$,.. without causing significant reduction of accuracy of the intensity values between the peaks of the spectrum $C(\lambda)$.

In an embodiment, the minimum spectral transmittance $T_{E,MIN}$ of the etalon 50 may be very low when spectral information is not needed from the spectral regions between the adjacent transmittance peaks P1, P2, P3, ... The minimum spectral transmittance $T_{E,MIN}$ may be e.g. lower than 10% of the maximum spectral transmittance $T_{E,MAX}$. The minimum spectral transmittance $T_{E,MIN}$ may be e.g. lower than 1% of the maximum spectral transmittance $T_{E,MAX}$.

The calibration function $\lambda_{cal}(S_d)$ and/or $S_{d,cal}(\lambda)$ is determined by matching the measured distribution $M(S_d)$ with the transmittance function $T_E(\lambda)$, wherein the matching comprises using cross-correlation. The measured distribution $M(S_d)$ is compared with the spectral transmittance $(T_E(\lambda))$ of the etalon (50) by using cross-correlation analysis.

The calibration function $\lambda_{cal}(S_d)$ and/or $S_{d,cal}(\lambda)$ is determined by correlation analysis. The distribution $M(S_d)$ may indicate intensity values as the function of control signal $S_d$. A calibrated distribution $M(S_{d,cal}(\lambda))$ may be determined from the measured distribution $M(S_d)$ by using the calibration function $S_{d,cal}(\lambda)$. The calibrated distribution $M(S_{d,cal}(\lambda))$ may provide intensity values as the function of spectral position $\lambda$. The calibration function $S_{d,cal}(\lambda)$ may be a regression function, which has one or more adjustable parameters. For example, the calibration function $S_{d,cal}(\lambda)$ may be a polynomial function, and the adjustable parameters may be the coefficients of the terms of the polynomial function.

The cross-correlation of the calibrated distribution $M(S_{d,cal}(\lambda))$ with the transmittance function $T_E(\lambda)$ may provide a value, which indicates the degree of similarity between the calibrated distribution $M(S_{d,cal}(\lambda))$ and the transmittance function $T_E(\lambda)$. The calibration function $\lambda_{cal}(S_d)$ and/or $S_{d,cal}(\lambda)$ may be determined by adjusting one or more parameters of the regression function $S_{d,cal}(\lambda)$, and calculating the cross-correlation of the calibrated distribution $M(S_{d,cal}(\lambda))$ with the transmittance function $T_E(\lambda)$. One or more parameters of the regression function may be adjusted until the cross-correlation of the calibrated distribution $M(S_{d,cal}(\lambda))$ with the transmittance function $T_E(\lambda)$ reaches a maximum value. The cross-correlation may reach a maximum value when the spectral positions of the peaks of the calibrated distribution $M(S_{d,cal}(\lambda))$ substantially coincide with the spectral positions of the peaks of the transmittance function $T_E(\lambda)$.

An auxiliary transmittance function $T_E(\lambda_{cal}(S_d))$ of the etalon 50 may give the transmittance of the etalon 50 as the function of control signal $S_d$. The calibration function $\lambda_{cal}(S_d)$ may be expressed as a regression function, which has one or more adjustable parameters. One or more parameters of the regression function may be adjusted until the cross-correlation of the measured distribution $M(S_d)$ with the auxiliary transmittance function $T_E(\lambda_{cal}(S_d))$ reaches a maximum value.

The method may comprise:

- providing a regression function $S_{d,cal}(\lambda)$ or $(\lambda_{cal}(S_d))$,
- determining a calibrated spectral intensity distribution $(M(S_{d,cal}(\lambda))$ from the measured spectral intensity distribution $(M(S_d))$ by using the regression function, and
- determining one or more parameters of the regression function $(S_{d,cal}(\lambda))$ such that the cross-correlation of the calibrated spectral intensity distribution $(M(S_{d,cal}(\lambda))$ with the spectral transmittance $(T_{E,MAX})$ of the etalon (50) reaches a maximum value.

The method may comprise:

- providing a regression function $S_{d,cal}(\lambda)$ or $(\lambda_{cal}(S_d))$,
- determining an auxiliary transmittance $(T_E(\lambda_{cal}(S_d)))$ from the spectral transmittance $(T_E(\lambda))$ of the etalon (50) by using the regression function, and
- determining one or more parameters of the regression function $(\lambda_{cal}(S_d))$ such that the cross-correlation of the distribution $(M(S_d))$ with the auxiliary transmittance $(T_E(\lambda_{cal}(S_d)))$ reaches a maximum value.

In an embodiment, the accuracy of the calibration function $\lambda_{cal}(S_d)$ and/or $S_{d,cal}(\lambda)$ may be verified by checking whether the maximum value of the cross-correlation is higher than or equal to a predetermined limit. If the maximum value of the cross-correlation is lower than the predetermined limit, this may be an indication that the calibration function is not valid.

The spectrometer 500 may comprise a temperature sensor 58 for monitoring operating temperature of the etalon 50 (see e.g. Fig. 5). The temperature sensor 58 may provide a temperature signal $S_{TEMP}$ indicative of the operating temperature of the etalon 50. The temperature sensor 58 may provide a temperature signal $S_{TEMP}$ indicative of the operating temperature of the substrate of the etalon 50. The sensor may be implemented e.g. by a thermocouple, Pt100 sensor, or by a P-N junction. The spectral positions of the transmittance peaks of the etalon may be accurately known as a function of the operating temperature. The method may comprise monitoring the temperature of the etalon 50, and determining a spectral position $\lambda_{P1}$ of a transmittance peak P1 based on the temperature of the etalon 50. Accordingly, an apparatus comprises means for providing a temperature signal $S_{TEMP}$ indicative of the operating temperature of the etalon 50 and means for determining a spectral position $\lambda_{P1}$ of the first transmittance peak P1 based on the temperature of the etalon 50 according to certain embodiments.

According to certain embodiments, variation of performance characteristics due to temperature changes can be considered by means of the temperature signal $S_{TEMP}$ indicative of the operating temperature of the substrate of the etalon 50, thus improving precision of calibration. The spectral positions of the transmittance peaks of the etalon 50 as a function of the operating temperature may be, for example, calculated by the control unit CNT1.

As changes of temperatures of the environment typically also affect the operating temperature of the Fabry-Perot interferometer 100, temperature drift will occur in the wavelength response of the interferometer 100. Suprisingly, the temperature signal $S_{TEMP}$ indicative of the operating temperature of the substrate of the etalon 50 can also be used for calculation of temperature related performance characteristics of the Fabry-Perot interferometer 100 according to certain embodiments. Further, the temperature signal $S_{TEMP}$ indicative of the operating temperature of the substrate of the etalon 50 can be used for calculation of temperature related performance characteristics of any given unit of the system according to certain embodiments.

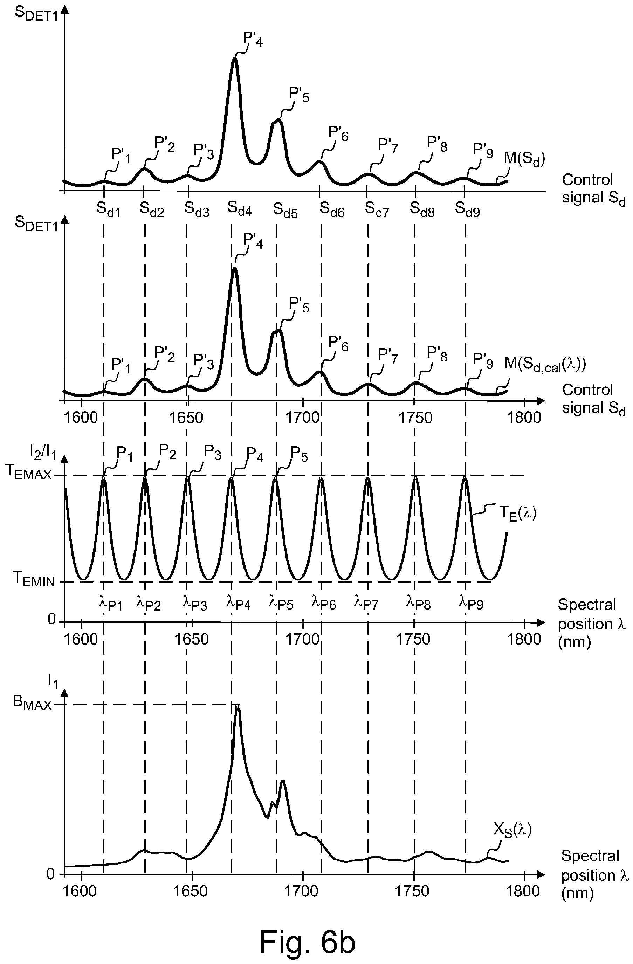

Fig. 6b shows determining a calibrated spectrum $X_S(\lambda)$ from the measured spectral intensity distribution $M(S_d)$ of Fig. 6a. The uppermost curve of Fig. 6b shows the measured spectral intensity distribution $M(S_d)$, which may be obtained by varying the mirror gap $d_{FP}$, and by recording the detector signal values $S_{DET1}$ as the function of the control signal $S_d$. The second curve from the top of Fig. 6b shows a calibrated spectral intensity distribution $M(S_{d,cal}(\lambda))$ determined from the distribution $M(S_d)$ by using the calibration function $\lambda_{cal}(S_d)$ and/or $S_{d,cal}(\lambda)$. The calibrated measured spectrum $X_S(\lambda)$ may be determined from the distribution $M(S_{d,cal}(\lambda))$ by using the spectral transmittance $T_E(\lambda)$ of the etalon and by using the intensity calibration data CPAR1. Calibrated intensity values may be determined from the detector signal values $S_{DET1}$ by using the intensity calibration data CPAR1. The filtering effect of the etalon may be compensated by dividing the calibrated spectral intensity distribution $M(S_{d,cal}(\lambda))$ with the spectral transmittance $T_E(\lambda)$. The filtering effect of the etalon may be compensated by multiplying with the function $1/T_E(\lambda)$. The calibrated measured spectrum $X_S(\lambda)$ may be obtained by multiplying the calibrated spectral intensity distribution $M(S_{d,cal}(\lambda))$ with the function $1/T_E(\lambda)$, and by using the intensity calibration data CPAR1 to convert detector signal values to calibrated intensity values. The calibrated measured spectrum $X_S(\lambda)$ may represent the spectrum $B(\lambda)$ of the input light LB1. The calibrated measured spectrum $X_S(\lambda)$ of the input light LB1 may represent the spectrum of the object OBJ1.

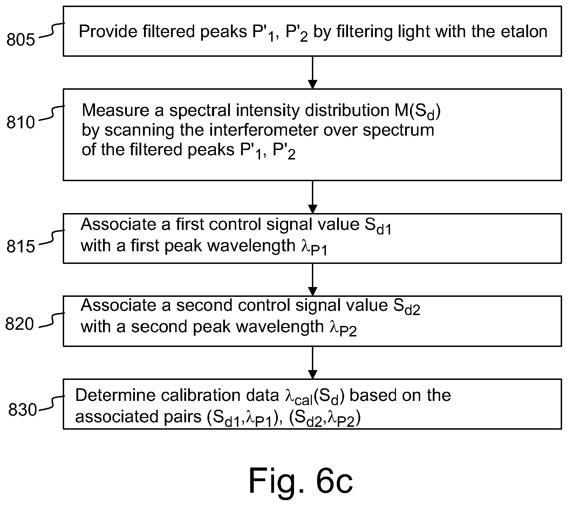

Fig. 6c shows, by way of example, method steps for matching the measured distribution with the spectral transmittance of the etalon. The matching may comprise associating control signal values with predetermined spectral positions.

In step 805, a plurality of filtered peaks $P'_1$, $P'_2$ may be provided by filtering input light LB1 with the etalon 50.

In step 810, the distribution $M(S_d)$ may be measured by scanning the interferometer 100 over the filtered peaks $P'_1$, $P'_2$.

In step 815, a first marker signal value $S_{d1}$ may be determined by analyzing a first peak $P'_1$ of the distribution $M(S_d)$. The first marker signal value $S_{d1}$ may be associated with the spectral position $\lambda_{P1}$ of the first peak P1 of the spectral transmittance $T_E(\lambda)$ of the etalon 50.

In step 820, a second marker signal value $S_{d2}$ may be determined by analyzing a second peak $P'_2$ of the distribution $M(S_d)$. The second marker signal value $S_{d2}$ may be associated with the spectral position $\lambda_{P2}$ of the second peak P2 of the spectral transmittance $T_E(\lambda)$ of the etalon 50.

In step 830, the calibration data $\lambda_{cal}(S_d)$ and/or $S_{d,cal}(\lambda)$ may be determined from the associated pairs $(\lambda_{P1}, S_{d1})$, $(\lambda_{P2}, S_{d2})$.

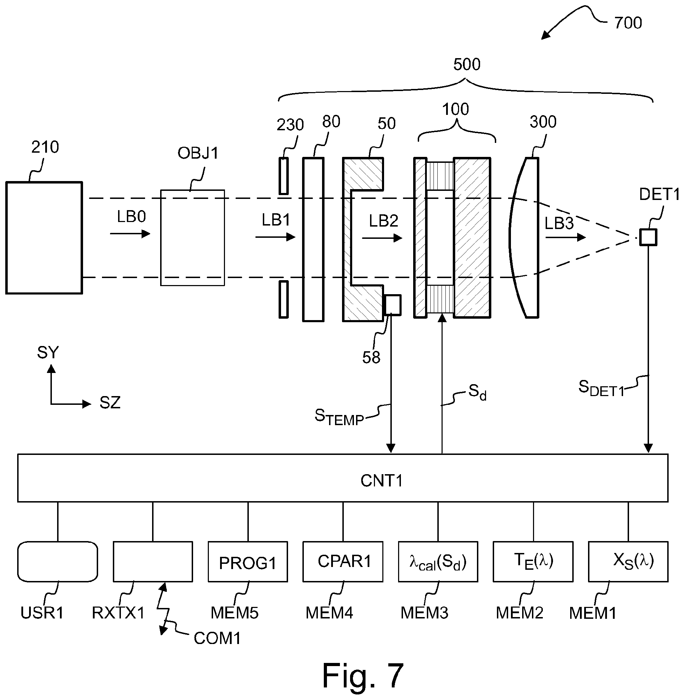

Fig. 7 shows an apparatus 700 suitable for absorption or reflection measurements. The apparatus 700 may comprise a spectrometer 500 and a light source unit 210. The light source unit 210 may provide illuminating light LB0. The apparatus 700 may be arranged to analyze an object OBJ1. The object OBJ1 may be e.g. an amount of chemical substance contained in a cuvette. The object OBJ1 may be e.g. a piece of material. The light source unit 210 may be arranged to illuminate the object OBJ1. The spectrometer 500 may be arranged to receive light LB1 transmitted through the object OBJ1 and/or to receive light LB1 reflected from the object OBJ1.

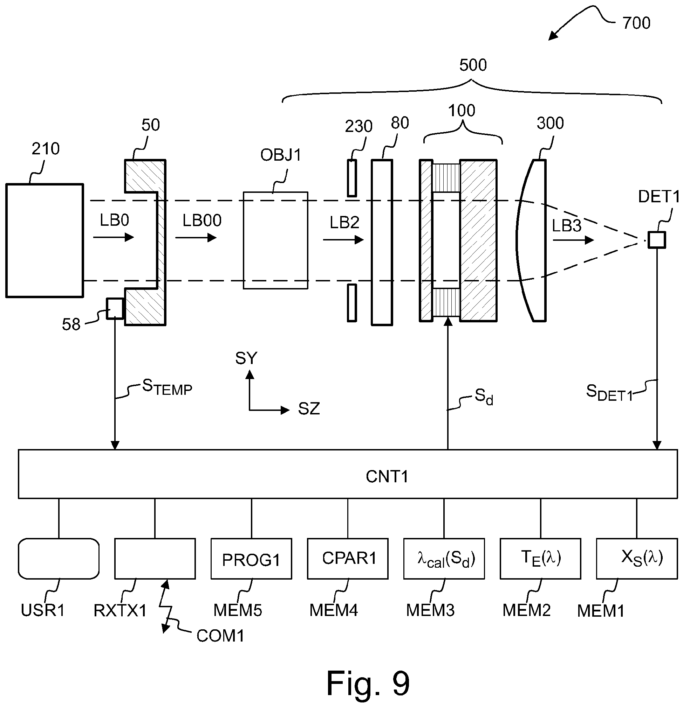

The apparatus 700 may comprise an etalon 50. The etalon may be arranged to filter light transmitted via the optical path of the apparatus 700. For example, the etalon 50 may be positioned between the object OBJ1 and the spectrometer 500. For example, the light source unit 210 may comprise the etalon 50. For example, the spectrometer 500 may comprise the etalon 50. For example, the etalon may be positioned between the light source unit 210 and the object OBJ1 (see Fig. 9).

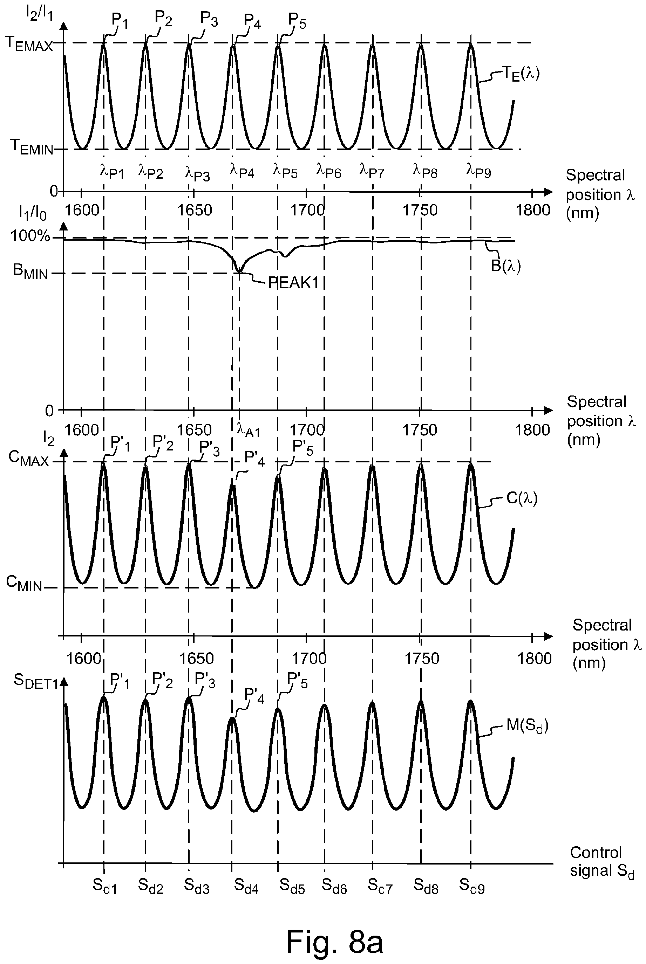

Fig. 8a illustrates filtering of light by the etalon 50 in case of the absorption (or reflectance) measurement. Input light LB1 impinging on the etalon 50 may have an input spectrum $B(\lambda)$, and filtered light LB2 transmitted through the etalon 50 may have a filtered spectrum C(X).The etalon 50 may provide the filtered light LB2 by filtering the input light LB1. The filtered spectrum $C(\lambda)$ may be obtained by multiplying the input spectrum $B(\lambda)$ with the transmittance $T_E(\lambda)$ of the etalon 50 (see equation 1).

The uppermost curve of Fig. 8a shows the spectral transmittance $T_E(\lambda)$ of the etalon 50. The second curve from the top of Fig. 8a shows an input spectrum $B(\lambda)$. The input spectrum $B(\lambda)$ may be e.g. an absorption spectrum or a reflectance spectrum. The third curve from the top of Fig. 8a shows a filtered spectrum $C(\lambda)$, which is formed by filtering the input spectrum $B(\lambda)$ with the etalon 50. The lowermost curve of Fig. 8a shows a measured spectral intensity distribution $M(S_d)$ obtained by scanning the interferometer 100 over the filtered peaks $P'_1$, $P'_2$ of the spectrum $C(\lambda)$.

The spectral intensity distribution $M(S_d)$ of the filtered light may be measured by scanning the Fabry-Perot interferometer 100. The measured distribution $M(S_d)$ may be converted into a calibrated distribution by using the calibration function $\lambda_{cal}(S_d)$ and/or $S_{d,cal}(\lambda)$. The calibration function $\lambda_{cal}(S_d)$ and/or $S_{d,cal}(\lambda)$ may checked by comparing the measured distribution $M(S_d)$ with the spectral transmittance $T_E(\lambda)$ of the etalon 50

The spectral position $\lambda_{P1}$ of the transmission peak $P_1$ is accurately known, and the spectral position of a filtered peak $P'_1$ of the filtered spectrum $C(\lambda)$ may substantially coincide with the spectral position $\lambda_{P1}$ of a transmission peak $P_1$ of the etalon 50 when the transmission peak $P_1$ is within a moderately sloped portion POR1 of the spectrum $B(\lambda)$. Each marker value $S_{d1}$, $S_{d2}$, $S_{d3}$, $S_{d4}$,.. may be classified to be a matching value or a non-matching value. A marker value $S_{d1}$ may be classified to be a matching value if the marker value $S_{d1}$ corresponds to a peak wavelength $\lambda_{P1}$, which is within a moderately sloped portion POR1 of the input spectrum $B(\lambda)$, and if the marker value $S_{d1}$ substantially coincides with an estimated control signal value $S_{cal,d}(\lambda_{P1})$. One or more spectral positions, e.g. the position $\lambda_4$ may be within a steeply sloped portion POR2 of the input spectrum $B(\lambda)$. One or more marker values $S_{d4}$ may be omitted when determining and/or checking the calibration function $\lambda_{cal}(S_d)$ and/or $S_{d,cal}(\lambda)$.

Data pairs $(\lambda_{P1}, S_{d1})$, $(\lambda_{P2}, S_{d2})$, $(\lambda_{P3}, S_{d3})$, ... for determining and/or checking the calibration function $\lambda_{cal}(S_d)$ and/or $S_{d,cal}(\lambda)$ may be obtained by:

- determining a plurality of marker values $S_{d1}$, $S_{d2}$, $S_{d3}$, ... from a measured distribution $M(S_d)$,
- classifying two or more marker values $S_{d1}$, $S_{d2}$, $S_{d3}$, ...as matching marker values $S_{d1}$, $S_{d2}$, $S_{d3}$, ..., and
- forming the data pairs $(\lambda_{P1}, S_{d1})$, $(\lambda_{P2}, S_{d2})$, $(\lambda_{P3}, S_{d3})$ by associating each matching marker value $S_{d1}$, $S_{d2}$, $S_{d3}$, ... with an accurately known peak wavelength $\lambda_{P1}$, $\lambda_{P2}$, $\lambda_{P3}$, ... of a transmittance peak P1, P2, P3.

The accuracy of a calibration function $\lambda_{cal}(S_d)$ and/or $S_{d,cal}(\lambda)$ may be improved and/or checked by using the data pairs $(\lambda_{P1}, S_{d1})$, $(\lambda_{P2}, S_{d2})$, $(\lambda_P, S_{d3})$. A modified calibration function $\lambda_{cal}(S_d)$ and/or $S_{d,cal}(\lambda)$ may be determined by using the data pairs $(\lambda_{P1}, S_{d1})$, $(\lambda_{P2}, S_{d2})$, $(\lambda_{P3}, S_{d3})$. The modified calibration function $\lambda_{cal}(S_d)$ and/or $S_{d,cal}(\lambda)$ may be slightly different from the preliminary calibration function. The modified calibration function $\lambda_{cal}(S_d)$ and/or $S_{d,cal}(\lambda)$ may be stored e.g. in a memory MEM3.

An improved estimate $B_M(\lambda$ for input spectrum $B(\lambda)$ may subsequently be determined by providing a calibrated distribution $M(S_{cal,d}(\lambda))$ from the measured distribution $M(S_d)$ by using the modified calibration function $S_{cal,d}(\lambda)$, and by dividing the calibrated distribution $M(S_{cal,d}(\lambda))$ with the transmittance $T_E(\lambda)$ of the etalon 50 (see equation 5).

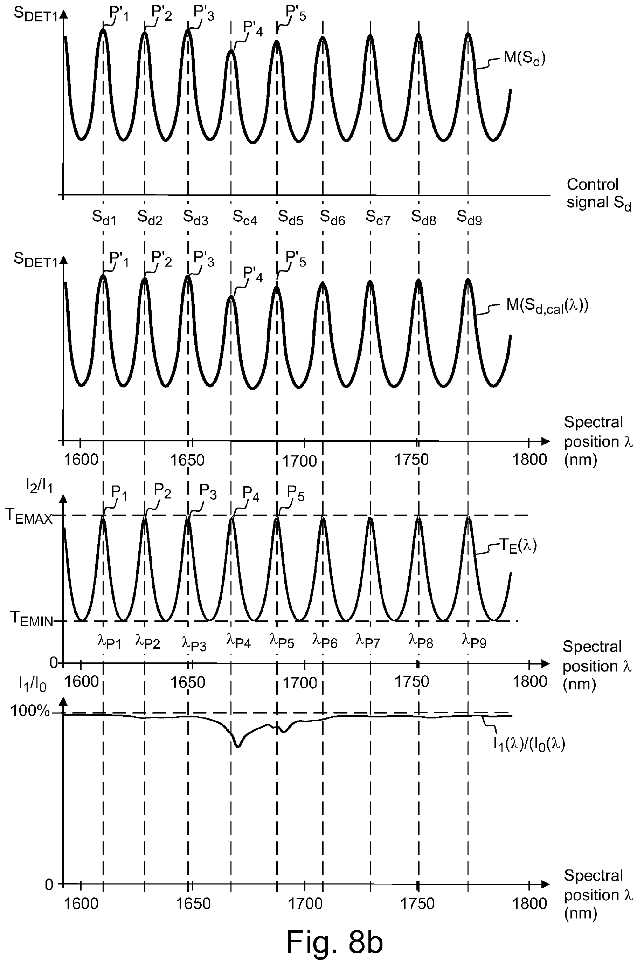

Fig. 8b shows forming a measured absorption spectrum $I_1(\lambda)/I_0(\lambda)$ from the measured spectral intensity distribution $M(S_d)$ of Fig. 8a. The uppermost curve of Fig. 8b shows the measured spectral intensity distribution $M(S_d)$, which may be obtained by varying the mirror gap $d_{FP}$, and by recording the detector signal values $S_{DET1}$ as the function of the control signal $S_d$. The second curve from the top of Fig. 8b shows a calibrated spectral intensity distribution $M(S_{d,cal}(\lambda))$ determined from the measured spectral intensity distribution $M(S_d)$ by using the calibration function $\lambda_{cal}(S_d)$ and/or $S_{d,cal}(\lambda)$.The filtering effect of the etalon may be compensated by dividing the calibrated spectral intensity distribution $M(S_{d,cal}(\lambda))$ with the spectral transmittance $T_E(\lambda)$. The filtering effect of the etalon may be compensated by multiplying with the function $1/T_E(\lambda)$.

If desired, a calibrated measured spectrum $X_S(\lambda)$ may be obtained by multiplying the calibrated spectral intensity distribution $M(S_{d,cal}(\lambda))$ with the function $1/T_E(\lambda)$, and by using the intensity calibration data CPAR1 to convert detector signal values to calibrated intensity values. The calibrated measured spectrum $X_S(\lambda)$ may represent the spectrum of light transmitted through the object OBJ1 or the spectrum of light reflected by the object OBJ1.

The absorption spectrum $I_1(k)/I_0(\lambda)$ may also be determined by using a reference distribution. In an embodiment, the absorption spectrum $I_1(\lambda)/I_0(\lambda)$ may be determined without determining calibrated intensity values. The reference distribution $M_{REF}(S_{d,cal}(\lambda))$ may be obtained by measuring the spectral intensity distribution without the absorbing sample OBJ1. The reference distribution $M_{REF}(S_{d,cal}(\lambda))$ may represent e.g. the spectrum of the illuminating light LB0. The reference distribution $M_{REF}(S_{d,cal}(\lambda))$ may be stored e.g. in the memory MEM4 of the apparatus 700. The measured absorption spectrum $I_1(\lambda)/I_0(\lambda)$ may be determined from the calibrated spectral intensity distribution $M(S_{d,cal}(\lambda))$ by using the spectral transmittance $T_E(\lambda)$ of the etalon, and by using the reference distribution $M_{REF}(S_{d,cal}(\lambda))$. A compensated spectral intensity distribution may be determined from the calibrated spectral intensity distribution $M(S_{d,cal}(\lambda))$ by dividing with the spectral transmittance $1/T_E(\lambda)$, and the measured absorption spectrum $I_1(\lambda)/I_0(\lambda)$ may be determined by dividing the reference distribution $M_{REF}(S_{d,cal}(\lambda))$ with the compensated spectral intensity distribution $M(S_{d,cal}(\lambda))/T_E(\lambda)$.

Referring to Fig. 9, the etalon 50 may also be positioned between the light source unit 210 and the object OBJ1.

When measuring the reflectance spectrum of an object OBJ1, the object OBJ1 may be illuminated with illuminating light. The illuminating light may have a broad spectrum. In an embodiment, the bandwidth of the illuminating light may be greater than or equal to the detection range of the spectrometer 500.

Fig. 10 shows, by way of example, an interferometer 100 where the optical cavity has been formed by etching. The spectrometer 500 may comprise the interferometer shown in Fig. 10. The spectrometer 500 may comprise an interferometer 100 where the optical cavity has been formed by etching. The spectrometer 500 may comprise an interferometer 100 where an empty space ESPACE1 between the mirrors 110, 120 has been formed by etching, after the material layers of the mirrors 110, 120 have been formed.

The mirror 110 may be supported by a spacer 115. The spacer 115 may be deposited on top of the mirror 120. The interferometer 100 may be produced by a method, which comprises depositing two or more material layers of the mirror 110 on top of the spacer 115. The empty space ESPACE1 between the mirrors 110, 120 may be formed by etching material away from between the mirrors 110, 120 after the two or more material layers of the mirror 110 have been deposited.

The first mirror 110 may have a movable portion MPOR1, and the first mirror 110 may be called e.g. as the movable mirror. The movable portion MPOR1 of the movable mirror 110 may be moved with respect to the stationary mirror 120 in order to adjust the mirror gap $d_{FP}$. The second mirror 120 may be called e.g. as the stationary mirror.

The stationary mirror 120 may comprise a plurality of material layers supported by substrate 130. The movable mirror 110 may be supported by the spacer layer 115. The spacer layer 115 may be formed on top of the stationary mirror 120, and the movable mirror 110 may be supported by the spacer layer 115. The movable mirror 110 may comprise e.g. material layers 110a, 110b, 110c, 110d, and/or 110e. The stationary mirror 120 may comprise e.g. material layers 120a, 120b, 120c, 120d, and/or 120e. The mirrors 110, 120 may be implemented by using reflective multilayer coatings. The mirrors 110, 120 may comprise reflective multilayer coatings. The material layers of the stationary mirror 120 may be formed e.g. by depositing material on top of a substrate 130 and/or by locally converting material of the substrate 130. The spacer layer 115 may be deposited on top of the stationary mirror 120 after the material layers of the stationary mirror 120 have been formed. The material layers of the movable portion MPOR1 may be formed after the spacer layer 115 has been deposited, by depositing material layers of the movable mirror 110 on top of the spacer layer 115. The material layers of the mirrors 110, 120 may be e.g. silicon-rich silicon nitride, polycrystalline silicon, doped polycrystalline silicon, silicon oxide and/or aluminum oxide. The layers may be deposited e.g. by using a LPCVD process. LPCVD means low pressure chemical vapor deposition. The substrate 130 may be e.g. monocrystalline silicon or fused silica. The spacer layer 115 may comprise e.g. silicon dioxide. The spacer layer 115 may consist essentially of silicon dioxide. The spacer layer 115 may consist of silicon dioxide. The empty space ESPACE1 between the mirrors 110, 120 of the interferometer 100 may be formed by etching. The material of the spacer layer 115 may etched away e.g. by using hydrofluoric acid (HF). The mirror 110 may comprise a plurality of miniature holes H1 for guiding hydrofluoric acid (HF) into the space between the mirrors 110, 120 and for removing the material of the spacer layer 115. The width of the holes H1 may be so small that they do not significantly degrade the optical properties of the interferometer 100.

The movable portion MPOR1 may be moved e.g. by an electrostatic actuator 140. The electrostatic actuator 140 may comprise two or more electrodes Ga, Gb. $V_a$ denotes the voltage of the first electrode Ga, and $V_b$ denotes the voltage of the second electrode Gb. The electrodes Ga, Gb may generate an attractive electrostatic force F1 when a voltage difference $V_a$-$V_b$ ($=V_{ab}$) is applied between the electrodes Ga, Gb. The electrostatic force F1 may pull the movable portion MPOR1 towards the stationary mirror 120.

The electrostatic actuator 140 may be rugged, and/or mechanically stable and/or shock-proof. The electrostatic actuator 140 may have small size. The interferometer 100 may be produced at low costs when the interferometer 100 comprises the electrostatic actuator 140.

The interferometer 100 may optionally comprise a capacitive sensor for monitoring the mirror gap. The interferometer 100 may comprise an electrostatic actuator 140, and a capacitive sensor for monitoring the mirror gap. However, the use of the capacitive sensor is not necessary. Thanks to using the etalon for spectral stabilization, an interferometer 100 having an electrostatic actuator 140 may be implemented without a capacitive sensor for monitoring the mirror gap.

The voltage $V_a$ may applied to the electrode Ga by using a conductor CON1 and a terminal N1. The voltage $V_b$ may applied to the electrode Gb by using a conductor CON2 and a terminal N2. The voltages $V_a$, $V_b$ may be provided by a voltage supply, which may be controlled by the control unit CNT1. The voltages $V_a$, $V_b$ may be provided according to the control signal $S_d$. The terminals N1, N2 may be e.g. metallic, and the conductors CON1, CON2 may be e.g. bonded to the terminals N1, N2.

The aperture portion AP1 of the movable portion MPOR1 may have a width w1. The aperture portion AP1 of the movable mirror 110 may be substantially flat in order to provide sufficient spectral resolution. The magnitude of electrostatic forces directly exerted on the aperture portion AP1 may be kept low in order to preserve the flatness of the aperture portion AP1. An electrostatic force F1 for moving the movable portion MPOR1 may be generated by using a substantially annular electrode Gb, which surrounds the aperture portion AP2 of the stationary mirror 120. The mirror 120 may optionally comprise a neutralizing electrode Gc, which may be arranged to keep the aperture portion AP1 flat during the scanning, by reducing forces exerted on the aperture portion AP1. The neutralizing electrode Gc may be substantially opposite the aperture portion AP1 of the movable mirror 110. The voltage of the neutralizing electrode Gc may be kept substantially equal to the voltage Va of the electrode Ga, in order to reduce deformation of the aperture portion AP1 of the movable mirror 110. The voltage difference between the electrodes Ga and Gc may be kept smaller than a predetermined limit in order to reduce deformation of the aperture portion AP1 of the movable mirror 110. Consequently, the movable portion MPOR1 may be moved by the electrostatic force F1 such that said force F1 pulls an annular region surrounding the aperture portion AP1, wherein the aperture portion AP1 may remain as a substantially force-free region.

The neutralizing electrode Gc may be galvanically connected to the electrode Ga e.g. by using a connecting portion N1b. The annular electrode Gb may be positioned around the neutralizing electrode Gc. The electrodes Ga and Gc may be substantially transparent at the operating spectral region of the interferometer 100. The electrodes Ga, Gb and Gc may comprise e.g. doped polycrystalline silicon, which may be substantially transparent for infrared light LB3.

The electrodes Ga, Gb may generate the electrostatic force F1 when a driving voltage $V_{ab}$ is applied to the electrodes Ga, Gb. The driving voltage $V_{ab}$ may be equal to the voltage difference $V_a$-$V_b$. The voltage may be applied to the electrodes Ga, Gb e.g. via the conductors CON1, CON2 and the terminals N1, N2. The electrode Gc may be galvanically connected to the electrode Ga. The mirror 110 may be flexible and/or the spacer 115 may be mechanically compressible such that the mirror gap $d_{FP}$ may be changed by changing the magnitude of the electrostatic force F1. The magnitude of the electrostatic force F1 may be changed by changing the driving voltage $V_a$-$V_b$ (=$V_{ab}$). The spectrometer 500 may comprise a driving voltage unit 142, which may be arranged to generate the driving voltage $V_{ab}$ according to the control signal $S_d$.

A portion of the mirror 110 between the aperture portion AP1 and spacer 115 may be flexible so as to allow varying the mirror gap $d_{FP}$. The thickness of the mirror 110 may be selected so as to allow repeated local bending.

Applying a first driving voltage $V_{ab}$ to the electrodes Ga, Gb may cause adjusting the transmission peak $P_{FP,k}$ of the interferometer 100 to a first spectral position (e.g. to the position $\lambda_{P1}$), and applying a second different driving voltage $V_{ab}$ to the electrodes Ga, Gb may cause adjusting the transmission peak $P_{FP,k}$ of the interferometer 100 to a second different spectral position (e.g. to the position $\lambda_{P2}$).

During normal operation, the space ESPACE1 between the mirrors 110, 120 may be filled with a gas. However, the interferometer 100 may also be operated in vacuum so that the gas pressure in the space ESPACE1 is substantially equal to zero.

The interferometer 100 produced by depositing and etching may be considered to have a substantially monolithic structure. Said interferometer 100 may be e.g. shock resistant and small. The mass of the movable portion MPOR1 may be small, and the interferometer 100 may have a high scanning speed. The movable portion MPOR1 may be rapidly accelerated to the full scanning speed.

Referring to Fig. 11, the spectrometer 500 may comprise an interferometer 100, which has a distance sensor 150 for monitoring the mirror gap $d_{FP}$. The distance sensor 150 may be e.g. a capacitive sensor, which comprises two or more capacitor plates G1, G2. A first capacitor plate G1 may be attached to the first mirror 110, and a second capacitor plate G2 may be attached to the second mirror 120 so that the distance between the plates G1, G2 depends on the mirror gap $d_{FP}$. The capacitor plates G1, G2 may together form a capacitor, which has a capacitance $C_x$ such that the capacitance $C_x$ may depend on the mirror gap $d_{FP}$. The capacitance value $C_x$ may be indicative of the mirror gap $d_{FP}$. The capacitor plates G1, G2 may be connected to a capacitance monitoring unit 152 e.g. by conductors CONa, CONb. The capacitance monitoring unit 152 may provide a signal $S_d$ indicative of the capacitance $C_x$ of the sensor 150. The capacitance monitoring unit 152 may provide a signal $S_d$ indicative of the mirror gap $d_{FP}$.

The capacitance monitoring unit 152 may be arranged to measure the capacitance $C_x$ e.g. by charging the capacitive sensor 150 with a predetermined current, and by measuring a time needed to charge the sensor 150 to a predetermined voltage. The capacitance monitoring unit 152 may be arranged to measure the capacitance $C_x$ e.g. by coupling the capacitive sensor 150 as a part of a resonance circuit, and measuring the resonance frequency of the resonance circuit. The capacitance monitoring unit 152 may be arranged to measure the capacitance $C_x$ e.g. by using the capacitive sensor 150 to repetitively transfer charge to a tank capacitor, and counting the number of charge transfer cycles needed to reach a predetermined tank capacitor voltage.

The interferometer 100 may comprise a driving unit 142. The driving unit 142 may e.g. convert a digital driving signal $S_{140}$ into an analog signal suitable for driving the actuator 140. The driving unit 142 may provide e.g. a voltage signal $V_{ab}$ for driving an electrostatic actuator 140, or for driving a piezoelectric actuator 140.

In an embodiment, the control unit CNT1 may be configured to provide a digital driving signal $S_{140}$ for changing the mirror gap $d_{FP}$, and the control unit CNT1 may be arranged to receive the control signal $S_d$.

The spectral scale of the spectrometer may be stabilized by using a Fabry-Perot etalon, which has fixed mirror spacing. The mirror spacing of the etalon may remain constant during scanning of the interferometer.

The optical cavity of the etalon 50 may consist of one or more solid materials, preferably silicon Si and/or silicon dioxide $SiO_2$.

The spectrometer 500 may be implemented e.g. in a first mobile unit. Determining spectral positions $\lambda$ from the control signal values $S_d$ may be carried out in the first mobile unit. Determining spectral positions $\lambda$ from the control signal values $S_d$ may be carried out in a second unit, which is separate from the first unit. The second unit may be stationary or mobile. The stationary unit may be implemented e.g. in a server, which may be accessed e.g. via the Internet.

The spectrometer 500 may be used e.g. for remote sensing applications. The spectrometer 500 may be used e.g. for measuring the color of an object OBJ1. The spectrometer 500 may be used e.g. for an absorption measurement, where the transmission peak of the interferometer 100 may be adjusted to a first spectral position to match with an absorption band of an object OBJ1, and the transmission peak of the interferometer 100 may be adjusted to a second spectral position to match with a reference band. The spectrometer 500 may be used e.g. for a fluorescence measurement, where the first spectral position of the transmission peak of the interferometer may be matched with fluorescent light emitted from an object OBJ1, and the second spectral position may be matched with the illuminating light, which induces the fluorescence.

When measuring the reflectance spectrum of an object OBJ1, the object OBJ1 may be illuminated with illuminating light. The illuminating light may have a broad spectrum. In an embodiment, the bandwidth of the illuminating light may be greater than or equal to the detection range of the spectrometer 500.

When broadband light is coupled into the spectrometer, the etalon may provide a filtered spectrum, which has a plurality of filtered peaks at stable spectral positions. The spectral scale of the interferometer 100 may be determined and/or verified by using the filtered peaks. The filtered spectrum may be measured by using the Fabry-Perot interferometer, in order to provide a measured filtered spectrum. The measured spectral intensity distribution $M(S_d)$ may substantially reproduce the transmittance peaks of the etalon, and the spectral scale may be determined and/or verified by using the peaks of the distribution $M(S_d)$. In particular, the spectral scale of the spectrometer may be stabilized in a situation where the relationship between the mirror gap and the control signal changes e.g. due to variations of operating temperature, mechanical shocks, and/or ageing.

The accuracy of the spectral scale of the interferometer 100 may be determined by the accuracy at which the spectral transmittance $T_E(\lambda)$ of the etalon is known. $\Delta\lambda_{DEV1}$ may denote a difference between an actual spectral position of a transmittance peak and a nominal spectral position of said transmittance peak. $\Delta\lambda_{DEV2}$ may denote a difference between an actual spectral position of the interferometer and a calibrated spectral position corresponding to said actual spectral position of the interferometer. The deviation $\Delta\lambda_{DEV2}$ may be e.g. smaller than $2 \cdot \Delta\lambda_{DEV1}$. The error ($\Delta\lambda_{DEV2}$) of detecting the spectral positions of the peaks of the filtered spectrum may be e.g. smaller than two times the error ($\Delta\lambda_{DEV1}$) of the known spectral positions of the peaks of the transmittance of the etalon.

In an embodiment, light may be coupled into a spectrometer by using one or more optical fibers. For example, light may be guided to the spectrometer from an optical probe by using one or more optical fibers.

The term "light" may refer to electromagnetic radiation in the ultraviolet, visible and/or infrared regime.

A spectral position may be defined e.g. by providing a wavelength value and/or by providing a wavenumber value. The spectral scale may be defined e.g. by using wavelength values and/or by using wavenumber values. The spectral scale may be called e.g. as the wavelength scale. Spectral calibration may also be called e.g. as wavelength calibration. Spectral calibration data may be called e.g. as wavelength calibration data.

For the person skilled in the art, it will be clear that modifications and variations of the devices and the methods according to the present invention are perceivable. The figures are schematic. The particular embodiments described above with reference to the accompanying drawings are illustrative only and not meant to limit the scope of the invention, which is defined by the appended claims.

**Claims**

1. A method for determining spectral calibration data ($\lambda_{cal}(S_d)$, $S_{d,cal}(\lambda)$) of a Fabry-Perot interferometer (100), the method comprising:

   - forming a plurality of filtered spectral peaks ($P'_1$, $P'_2$) by filtering input light (LB1) with a Fabry-Perot etalon (50) such that a first filtered peak ($P'_1$) corresponds to a first transmittance peak ($P_1$) of the etalon (50), and such that a second filtered peak ($P'_2$) corresponds to a second transmittance peak ($P_2$) of the etalon (50),
   - using the Fabry-Perot interferometer (100) for measuring a spectral intensity distribution ($M(S_d)$) of the filtered spectral peaks ($P'_1$, $P'_2$), wherein the spectral intensity distribution ($M(S_d)$) is measured by varying the mirror gap ($d_{FP}$) of the Fabry-Perot interferometer (100), and by providing a control signal ($S_d$) indicative of the mirror gap ($d_{FP}$), and
   - determining the spectral calibration data ($\lambda_{cal}(S_d)$, $S_{d,cal}(\lambda)$) by matching the measured spectral intensity distribution ($M(S_d)$)) with the spectral transmittance ($T_E(\lambda)$) of the etalon (50),
wherein the minimum spectral transmittance ($T_{E,MIN}$) of the etalon (50) is lower than or equal to 90% of the maximum spectral transmittance ($T_{E,MAX}$) of the etalon (50), and
wherein the matching comprises comparing the measured spectral intensity distribution $M(S_d)$ with the spectral transmittance ($T_E(\lambda)$) of the etalon (50) by using cross-correlation analysis to determine a spectral calibration function.

2. The method of claim 1 wherein the spectral calibration data ($\lambda_{cal}(S_d)$, $S_{d,cal}(\lambda)$) determines a relation for obtaining spectral positions ($\lambda$) from values of the control signal ($S_d$).

3. The method according to any of the claims 1 to 2 wherein first spectral calibration data ($\lambda_{cal}(S_d)$, $S_{d,cal}(\lambda)$) is determined by using input light (LB1) obtained from an object (OBJ1), and a calibrated spectrum ($I_1(\lambda)$) of an object (OBJ1) is determined from a measured spectral intensity distribution $M(S_d)$ by using said first spectral calibration data ($\lambda_{cal}(S_d)$).

4. The method according to any of the claims 1 to 3 comprising monitoring the temperature of the etalon (50), and determining a first spectral position ($\lambda_{P1}$) of the first transmittance peak (P1) based on the temperature of the etalon (50).

5. The method according to any of the claims 1 to 4 wherein the Fabry-Perot interferometer (100) comprises an electrostatic actuator (140), the mirror gap ($d_{FP}$) is varied by changing a driving voltage ($V_{ab}$) applied to the electrostatic actuator (140), and the driving voltage ($V_{ab}$) is changed according to the control signal ($S_d$).

6. The method according to any of the claims 1 to 4 wherein the interferometer (100) comprises a capacitive sensor (Ga, Gd) arranged to provide the control signal ($S_d$) by monitoring the mirror gap ($d_{FP}$) of the interferometer (100).

7. The method according to any of the claims 1 to 6, comprising:

   - analyzing the spectral intensity distribution $M(S_d)$ in order to determine a first control signal value ($S_{d1}$) associated with a first mirror gap ($d_{FP}$) when the transmission peak ($P_{FP,k}$) of the interferometer (100) substantially coincides with the first filtered peak ($P'_1$),
   - analyzing the spectral intensity distribution $M(S_d)$ in order to determine a second control signal value ($S_{d2}$) associated with a second mirror gap ($d_{FP}$) when the transmission peak ($P_{FP,k}$) of the interferometer (100) substantially coincides with the second filtered peak ($P'_2$),
   - forming a first association ($\lambda_{P1}$, $S_{d1}$) between the first control signal value ($S_{d1}$) and the spectral position ($\lambda_{P1}$) of the first transmittance peak (P1) of the etalon (50),
   - forming a second association ($\lambda_{P2}$, $S_{d2}$) between the second control signal value ($S_{d2}$) and the spectral position ($\lambda_{P2}$) of the second transmittance peak (P2) of the etalon (50), and
   - determining the spectral calibration data ($\lambda_{cal}(S_d)$) based on the first association ($\lambda_{P1}$, $S_{d1}$) and based on the second association ($\lambda_{P2}$, $S_{d2}$).

8. The method according to any of the claims 1 to 7, the method further comprising:

   - monitoring an operating temperature of the etalon (50) by means of a temperature sensor (58),
   - providing a temperature signal ($S_{TEMP}$) indicative of the operating temperature of the etalon (50), and
   - determining a spectral position ($\lambda_{P1}$) of a transmittance peak (P1) based on the temperature of the etalon (50).

9. The method according to any of the claims 1 to 8, wherein a signal power transmitted in the blocking bands is in a range between 1 % and 30 % of an original signal power, preferably between 10 % and 30 %.

10. The method according to any of the claims 1 to 9, wherein minimum transmittance peaks and maximum transmittance peaks of the etalon (50) are used for determining spectral calibration data ($\lambda_{cal}(S_d)$, $S_{d,cal}(\lambda)$) of a Fabry-Perot interferometer (100).

11. An apparatus (500) comprising at least one processor (CNT1), a memory (MEM5) including computer program code (PROG1), the memory (MEM5) and the computer program code (PROG1) configured to, with the at least one processor (CNT1), cause the apparatus (500) to perform the method according to any of the claims 1 to 10, when connected to an apparatus comprising an etalon to form a plurality of filtered spectral peaks ($P'_1$, $P'_2$) by filtering input light (LB1) such that a first filtered peak ($P'_1$) corresponds to a first transmittance peak ($P_1$) of the etalon, and such that a second filtered peak (P'$_2$) corresponds to a second transmittance peak (P$_2$) of the etalon, and a Farby-Perot interferometer to measure a spectral intensity distribution M(S$_d$) of the filtered spectral peaks (P'$_1$, P'$_2$) by varying the mirror gap (d$_{FP}$) of the Fabry-Perot interferometer.

**12.** An apparatus (500) comprising:

- an etalon (50) to form a plurality of filtered spectral peaks (P'$_1$, P'$_2$) by filtering input light (LB1) such that a first filtered peak (P'$_1$) corresponds to a first transmittance peak (P$_1$) of the etalon (50), and such that a second filtered peak (P'$_2$) corresponds to a second transmittance peak (P$_2$) of the etalon (50), and
- a Fabry-Perot interferometer (100) to measure a spectral intensity distribution M(S$_d$) of the filtered spectral peaks (P'$_1$, P'$_2$) by varying the mirror gap (d$_{FP}$) of the Fabry-Perot interferometer (100),

wherein the apparatus (500) is arranged:

- to provide a control signal (S$_d$) indicative of the mirror gap (d$_{FP}$), and
- to determine spectral calibration data ($\lambda_{cal}$(S$_d$)), (S$_{d,cal}$($\lambda$)) by matching the measured spectral intensity distribution M(S$_d$) with the spectral transmittance (T$_E$($\lambda$)) of the etalon (50),
- wherein the minimum spectral transmittance (T$_{E,MIN}$) of the etalon (50) is lower than or equal to 90% of the maximum spectral transmittance (T$_{E,MAX}$) of the etalon (50), and
- wherein the matching comprises comparing the measured spectral intensity distribution M(S$_d$) is compared with the spectral transmittance (T$_E$($\lambda$)) of the etalon (50) by using cross-correlation analysis to determine a spectral calibration function.

**13.** The apparatus of claim 12, wherein the optical cavity of the etalon (50) consists of one or more solid materials, preferably silicon (Si) and/or silicon dioxide (SiO$_2$).

**14.** The apparatus according to any of claims 12-13, wherein the Fabry-Perot interferometer (100) comprises an electrostatic actuator (140) for varying the mirror gap (d$_{FP}$) of the Fabry-Perot interferometer (100).

**15.** The apparatus according to any of claims 12-14, wherein the apparatus is further arranged to provide a temperature signal (S$_{TEMP}$) indicative of the operating temperature of the etalon (50).

**Patentansprüche**

**1.** Verfahren zur Bestimmung spektraler Kalibrierungsdaten ($\lambda_{cal}$(S$_d$), S$_{d,cal}$($\lambda$)) eines Fabry-Perot-Interferometers (100), wobei das Verfahren umfasst:

- Bilden einer Vielzahl von gefilterten Spektralspitzen (P'$_1$, P'$_2$) durch Filtern von Eingangslicht (LB1) mit einem Fabry-Perot-Etalon (50), sodass eine erste gefilterte Spitze (P'$_1$) einer ersten Durchlässigkeitsspitze (P$_1$) des Etalons (50) entspricht, und sodass eine zweite gefilterte Spitze (P'$_2$) einer zweiten Durchlässigkeitsspitze (P$_2$) des Etalons (50) entspricht,
- Verwenden des Fabry-Perot-Interferometers (100) zum Messen einer spektralen Intensitätsverteilung (M(S$_d$)) der gefilterten Spektralspitzen (P'$_1$, P'$_2$), wobei die spektrale Intensitätsverteilung (M(S$_d$)) durch Variieren des Spiegelabstands (d$_{FP}$) des Fabry-Perot-Interferometers (100) und durch Bereitstellen eines Steuersignals (S$_d$), das den Spiegelabstand (d$_{FP}$) anzeigt, gemessen wird, und
- Bestimmen der spektralen Kalibrierungsdaten ($\lambda_{cal}$(S$_d$), S$_{d,cal}$($\lambda$)) durch Abgleichen der gemessenen spektralen Intensitätsverteilung (M(S$_d$)) mit der spektralen Durchlässigkeit (T$_E$($\lambda$)) des Etalons (50), wobei die minimale spektrale Durchlässigkeit (T$_{E,MIN}$) des Etalons (50) kleiner oder gleich 90 % der maximalen spektralen Durchlässigkeit (T$_{E,MAX}$) des Etalons (50) ist, und wobei das Abgleichen ein Vergleichen der gemessenen spektralen Intensitätsverteilung M(S$_d$) mit der spektralen Durchlässigkeit (T$_E$($\lambda$)) des Etalons (50) durch Verwenden einer Kreuzkorrelationsanalyse umfasst, um eine spektrale Kalibrierungsfunktion zu bestimmen.

**2.** Verfahren nach Anspruch 1, wobei die spektralen Kalibrierungsdaten ($\lambda_{cal}$(S$_d$), S$_{d,cal}$($\lambda$)) eine Beziehung zum Erhalten von Spektralpositionen ($\lambda$) aus Werten des Steuersignals (S$_d$) bestimmen.

**3.** Verfahren nach einem der Ansprüche 1 bis 2, wobei erste spektrale Kalibrierungsdaten ($\lambda_{cal}$(S$_d$), S$_{d,cal}$($\lambda$)) durch

Verwenden von Eingangslicht (LB1) bestimmt werden, das von einem Objekt (OBJ1) erhalten wird, und ein kalibriertes Spektrum ($I_1(\lambda)$) eines Objekts (OBJ1) aus einer gemessenen spektralen Intensitätsverteilung $M(S_d)$ durch Verwenden der ersten spektralen Kalibrierungsdaten ($\lambda_{cal}(S_d)$) bestimmt wird.

4. Verfahren nach einem der Ansprüche 1 bis 3, umfassend das Überwachen der Temperatur des Etalons (50) und Bestimmen einer ersten spektralen Position ($\lambda_{P1}$) der ersten Durchlässigkeitsspitze (P1) basierend auf der Temperatur des Etalons (50).

5. Verfahren nach einem der Ansprüche 1 bis 4, wobei das Fabry-Perot-Interferometer (100) einen elektrostatischen Stellantrieb (140) umfasst, der Spiegelabstand ($d_{FP}$) durch Ändern einer Antriebsspannung ($V_{ab}$) variiert wird, die an den elektrostatischen Stellantrieb (140) angelegt wird, und die Antriebsspannung ($V_{ab}$) entsprechend dem Steuersignal ($S_d$) geändert wird.

6. Verfahren nach einem der Ansprüche 1 bis 4, wobei das Interferometer (100) einen kapazitiven Sensor (Ga, Gd) umfasst, der angeordnet ist, um das Steuersignal ($S_d$) durch Überwachen des Spiegelabstands ($d_{FP}$) des Interferometers (100) bereitzustellen.

7. Verfahren nach einem der Ansprüche 1 bis 6, umfassend:

   - Analysieren der spektralen Intensitätsverteilung $M(S_d)$, um einen ersten Steuersignalwert ($S_{d1}$) zu bestimmen, der einem ersten Spiegelabstand ($d_{FP}$) zugeordnet ist, wenn die Durchlässigkeitsspitze ($P_{FP,k}$) des Interferometers (100) im Wesentlichen mit der ersten gefilterten Spitze ($P'_1$) übereinstimmt,
   - Analysieren der spektralen Intensitätsverteilung $M(S_d)$, um einen zweiten Steuersignalwert ($S_{d2}$) zu bestimmen, der einem zweiten Spiegelabstand ($d_{FP}$) zugeordnet ist, wenn die Durchlässigkeitsspitze ($P_{FP,k}$) des Interferometers (100) im Wesentlichen mit der zweiten gefilterten Spitze ($P'_2$) übereinstimmt,
   - Bilden einer ersten Zuordnung ($A_{P1}, S_{d1}$) zwischen dem ersten Steuersignalwert ($S_{d1}$) und der spektralen Position ($\lambda_{P1}$) der ersten Durchlässigkeitsspitze (P1) des Etalons (50),
   - Bilden einer zweiten Zuordnung ($\lambda_{P2}, S_{d2}$) zwischen dem zweiten Steuersignalwert ($S_{d2}$) und der spektralen Position ($\lambda_{P2}$) der zweiten Durchlässigkeitsspitze (P2) des Etalons (50), und
   - Bestimmen der spektralen Kalibrierungsdaten ($\lambda_{cal}(S_d)$) basierend auf der ersten Zuordnung ($\lambda_{P1}, S_{d1}$) und basierend auf der zweiten Zuordnung ($\lambda_{P2}, S_{d2}$).

8. Verfahren nach einem der Ansprüche 1 bis 7, wobei das Verfahren weiter umfasst:

   - Überwachen einer Betriebstemperatur des Etalons (50) mittels eines Temperatursensors (58),
   - Bereitstellen eines Temperatursignals ($S_{TEMP}$), das die Betriebstemperatur des Etalons (50) anzeigt, und
   - Bestimmen einer spektralen Position ($\lambda_{P1}$) einer Durchlässigkeitsspitze (P1) basierend auf der Temperatur des Etalons (50).

9. Verfahren nach einem der Ansprüche 1 bis 8, wobei eine in den Sperrbändern übertragene Signalleistung in einem Bereich zwischen 1 % und 30 % einer ursprünglichen Signalleistung, bevorzugt zwischen 10 % und 30 % liegt.

10. Verfahren nach einem der Ansprüche 1 bis 9, wobei minimale Durchlässigkeitsspitzen und maximale Durchlässigkeitsspitzen des Etalons (50) zur Bestimmung spektraler Kalibrierungsdaten ($\lambda_{cal}(S_d)$, $S_{d,cal}(\lambda)$) eines Fabry-Perot-Interferometers (100) verwendet werden.

11. Einrichtung (500), umfassend mindestens einen Prozessor (CNT1), einen Speicher (MEM5), der einen Computerprogrammcode (PROG1) umfasst, wobei der Speicher (MEM5) und der Computerprogrammcode (PROG1) konfiguriert sind, um die Einrichtung (500) mit dem mindestens einen Prozessor (CNT1) zu veranlassen, das Verfahren nach einem der Ansprüche 1 bis 10 auszuführen, wenn sie mit einer Einrichtung verbunden ist, die einen Etalon umfasst, um eine Vielzahl gefilterter Spektralspitzen ($P'_1$, $P'_2$) durch Filtern des Eingangslichts (LB1) zu bilden, sodass eine erste gefilterte Spitze ($P'_1$) einer ersten Durchlässigkeitsspitze ($P_1$) des Etalons entspricht, und sodass eine zweite gefilterte Spitze ($P'_2$) einer zweiten Durchlässigkeitsspitze ($P_2$) des Etalons entspricht, und ein Fabry-Perot-Interferometer zur Messung einer spektralen Intensitätsverteilung $M(S_d)$ der gefilterten Spektralspitzen ($P'_1$, $P'_2$) durch Variieren des Spiegelabstands ($d_{FP}$) des Fabry-Perot-Interferometers.

12. Einrichtung (500), umfassend:

- einen Etalon (50) zum Bilden einer Vielzahl von gefilterten Spektralspitzen (P'$_1$, P'$_2$) durch Filtern von Eingangslicht (LB1), sodass eine erste gefilterte Spitze (P'$_1$) einer ersten Durchlässigkeitsspitze (P$_1$) des Etalons (50) entspricht, und sodass eine zweite gefilterte Spitze (P'$_2$) einer zweiten Durchlässigkeitsspitze (P$_2$) des Etalons (50) entspricht, und

- ein Fabry-Perot-Interferometer (100) zum Messen einer spektralen Intensitätsverteilung M(S$_d$) der gefilterten Spektralspitzen (P'$_1$, P'$_2$) durch Variieren des Spiegelabstands (d$_{FP}$) des Fabry-Perot Interferometers (100),

wobei die Einrichtung (500) ausgelegt ist:

- um ein Steuersignal (S$_d$) bereitzustellen, das den Spiegelabstand (d$_{FP}$) anzeigt, und
- um spektrale Kalibrierungsdaten ($\lambda_{cal}$(S$_d$)), (S$_{d,cal}$($\lambda$)) durch Abgleichen der gemessenen spektralen Intensitätsverteilung M(S$_d$) mit der spektralen Durchlässigkeit (T$_E$($\lambda$)) des Etalons (50) zu bestimmen,
- wobei die minimale spektrale Durchlässigkeit (T$_{E,MIN}$) des Etalons (50) kleiner oder gleich 90 % der maximalen spektralen Durchlässigkeit (T$_{E,MAX}$) des Etalons (50) ist, und
- wobei das Abgleichen ein Vergleichen der gemessenen spektralen Intensitätsverteilung M(S$_d$) mit der spektralen Durchlässigkeit (T$_E$($\lambda$)) des Etalons (50) durch Verwenden einer Kreuzkorrelationsanalyse umfasst, um eine spektrale Kalibrierungsfunktion zu bestimmen.

13. Einrichtung nach Anspruch 12, wobei der optische Hohlraum des Etalons (50) aus einem oder mehreren festen Materialien, bevorzugt Silizium (Si) und/oder Siliziumdioxid (SiO$_2$) besteht.

14. Einrichtung nach einem der Ansprüche 12-13, wobei das Fabry-Perot-Interferometer (100) einen elektrostatischen Stellantrieb (140) zum Variieren des Spiegelabstands (d$_{FP}$) des Fabry-Perot-Interferometers (100) umfasst.

15. Einrichtung nach einem der Ansprüche 12-14, wobei die Einrichtung weiter ausgelegt ist, um ein Temperatursignal (S$_{TEMP}$) bereitzustellen, das die Betriebstemperatur des Etalons (50) anzeigt.


## Revendications

1. Procédé de détermination de données d'étalonnage spectral ($\lambda_{cal}$(S$_d$), S$_{d,cal}$($\lambda$)) d'un interféromètre de Fabry-Pérot (100), le procédé comprenant les étapes consistant à :

- former une pluralité de crêtes spectrales filtrées (P'$_1$, P'$_2$) en filtrant une lumière d'entrée (LB1) avec un étalon de Fabry-Pérot (50) de telle sorte qu'une première crête filtrée (P'$_1$) corresponde à une première crête de transmittance (P$_1$) de l'étalon (50), et qu'une seconde crête filtrée (P'$_2$) correspond à une seconde crête de transmittance (P$_2$) de l'étalon (50),
- utiliser l'interféromètre de Fabry-Pérot (100) pour mesurer une distribution d'intensité spectrale (M(S$_d$)) des crêtes spectrales filtrées (P'$_1$, P'$_2$), dans lequel la distribution d'intensité spectrale (M(S$_d$)) est mesurée en faisant varier l'espace de miroirs (d$_{FP}$) de l'interféromètre de Fabry-Pérot (100), et en fournissant un signal de commande (S$_d$) indicatif de l'espace de miroirs (d$_{FP}$), et
- déterminer les données d'étalonnage spectral ($\lambda_{cal}$(S$_d$), S$_{d,cal}$($\lambda$)) en faisant correspondre la distribution d'intensité spectrale mesurée (M(S$_d$)) avec la transmittance spectrale (T$_E$($\lambda$)) de l'étalon (50),
dans lequel la transmittance spectrale minimale (T$_{E,MIN}$) de l'étalon (50) est inférieure ou égale à 90 % de la transmittance spectrale maximale (T$_{E,MAX}$) de l'étalon (50), et
dans lequel la mise en correspondance comprend la comparaison de la distribution d'intensité spectrale mesurée M(S$_d$) avec la transmittance spectrale (T$_E$($\lambda$)) de l'étalon (50) en utilisant une analyse de corrélation croisée pour déterminer une fonction d'étalonnage spectral.

2. Procédé selon la revendication 1, dans lequel les données d'étalonnage spectral ($\lambda_{cal}$(S$_d$), S$_{d,cal}$($\lambda$)) déterminent une relation pour obtenir des positions spectrales ($\lambda$) à partir de valeurs du signal de commande (S$_d$).

3. Procédé selon l'une quelconque des revendications 1 à 2, dans lequel les premières données d'étalonnage spectral ($\lambda_{cal}$(S$_d$), S$_{d,cal}$($\lambda$)) sont déterminées en utilisant une lumière d'entrée (LB1) obtenue à partir d'un objet (OBJ1), et un spectre étalonné (I$_1$($\lambda$)) d'un objet (OBJ1) est déterminé à partir d'une distribution d'intensité spectrale mesurée M(S$_d$) en utilisant lesdites premières données d'étalonnage spectral ($\lambda_{cal}$(S$_d$)).

4. Procédé selon l'une quelconque des revendications 1 à 3, comprenant la surveillance de la température de l'étalon (50), et la détermination d'une première position spectrale ($\lambda_{P1}$) de la première crête de transmittance (P1) sur la base de la température de l'étalon (50).

5. Procédé selon l'une quelconque des revendications 1 à 4, dans lequel l'interféromètre de Fabry-Pérot (100) comprend un actionneur électrostatique (140), l'espacement de miroirs ($d_{FP}$) varie en modifiant une tension d'entraînement ($V_{ab}$) appliquée à l'actionneur électrostatique (140), et la tension d'entraînement ($V_{ab}$) est modifiée en fonction du signal de commande ($S_d$).

6. Procédé selon l'une quelconque des revendications 1 à 4, dans lequel l'interféromètre (100) comprend un capteur capacitif (Ga, Gd) agencé pour fournir le signal de commande ($S_d$) en surveillant l'espacement de miroirs ($d_{FP}$) de l'interféromètre (100).

7. Procédé selon l'une quelconque des revendications 1 à 6, comprenant les étapes consistant à :

- analyser la distribution d'intensité spectrale M($S_d$) afin de déterminer une première valeur de signal de commande ($S_{d1}$) associée à un premier espace de miroirs ($d_{FP}$) lorsque la crête de transmission ($P_{FP,k}$) de l'interféromètre (100) coïncide sensiblement avec la première crête filtrée (P'$_1$),
- analyser la distribution d'intensité spectrale M($S_d$) afin de déterminer une seconde valeur de signal de commande ($S_{d2}$) associée à un second espace de miroirs ($d_{FP}$) lorsque la crête de transmission ($P_{FP,k}$) de l'interféromètre (100) coïncide sensiblement avec la seconde crête filtrée (P'$_2$),
- former une première association ($\lambda_{P1}, S_{d1}$) entre la première valeur de signal de commande ($S_{d1}$) et la position spectrale ($\lambda_{P1}$) de la première crête de transmittance (P1) de l'étalon (50),
- former une seconde association ($\lambda_{P2}, S_{d2}$) entre la seconde valeur de signal de commande ($S_{d2}$) et la position spectrale ($\lambda_{P2}$) de la seconde crête de transmittance (P2) de l'étalon (50), et
- déterminer les données d'étalonnage spectral ($\lambda_{cal}(S_d)$) sur la base de la première association ($\lambda_{P1}, S_{d1}$) et sur la base de la seconde association ($\lambda_{P2}, S_{d2}$).

8. Procédé selon l'une quelconque des revendications 1 à 7, dans lequel le procédé comprend en outre les étapes consistant à :

- surveiller une température de fonctionnement de l'étalon (50) au moyen d'un capteur de température (58),
- fournir un signal de température ($S_{TEMP}$) indicatif de la température de fonctionnement de l'étalon (50), et
- déterminer une position spectrale ($\lambda_{P1}$) d'une crête de transmittance (P1) sur la base de la température de l'étalon (50).

9. Procédé selon l'une quelconque des revendications 1 à 8, dans lequel une puissance de signal transmise dans les bandes de blocage est dans une plage comprise entre 1 % et 30 % d'une puissance de signal d'origine, de préférence entre 10 % et 30 %.

10. Procédé selon l'une quelconque des revendications 1 à 9, dans lequel des crêtes de transmittance minimale et des crêtes de transmittance maximale de l'étalon (50) sont utilisés pour déterminer des données d'étalonnage spectral ($\lambda_{cal}(S_d)$, $S_{d,cal}(\lambda)$) d'un interféromètre de Fabry-Pérot (100).

11. Appareil (500) comprenant au moins un processeur (CNT1), une mémoire (MEM5) incluant un code de programme informatique (PROG1), la mémoire (MEM5) et le code de programme informatique (PROG1) étant configurés pour, avec le au moins un processeur (CNT1), amener l'appareil (500) à exécuter le procédé selon l'une quelconque des revendications 1 à 10, lorsqu'il est connecté à un appareil comprenant un étalon pour former une pluralité de crêtes spectrales filtrées (P'$_1$, P'$_2$) par filtrage d'une lumière d'entrée (LB1) de telle sorte qu'une première crête filtrée (P'$_1$) corresponde à une première crête de transmittance (P$_1$) de l'étalon, et de telle sorte qu'une seconde crête filtrée (P'$_2$) corresponde à une seconde crête de transmittance (P$_2$) de l'étalon, et un interféromètre de Fabry-Pérot pour mesurer une distribution d'intensité spectrale M($S_d$) des crêtes spectrales filtrées (P'$_1$, P'$_2$) en faisant varier l'espace de miroirs ($d_{FP}$) de l'interféromètre de Fabry-Pérot,

12. Appareil (500), comprenant :

- un étalon (50) pour former une pluralité de crêtes spectrales filtrées (P'$_1$, P'$_2$) en filtrant une lumière d'entrée (LB1) de telle sorte qu'une première crête filtrée (P'$_1$) corresponde à une première crête de transmittance (P$_1$) de l'étalon (50), et de telle sorte qu'une seconde crête filtrée (P'$_2$) corresponde à une seconde crête de trans-

mittance ($P_2$) de l'étalon (50), et
- un interféromètre de Fabry-Pérot (100) pour mesurer une distribution d'intensité spectrale $M(S_d)$ des crêtes spectrales filtrées ($P'_1$, $P'_2$) en faisant varier l'espace de miroirs ($d_{FP}$) de l'interféromètre de Fabry-Pérot (100),

dans lequel l'appareil (500) est agencé pour :

- fournir un signal de commande ($S_d$) indicatif de l'espacement de miroirs ($d_{FP}$), et
- déterminer des données d'étalonnage spectral ($\lambda_{cal}(S_d)$), ($S_{d,cal}(\lambda)$) en faisant correspondre la distribution d'intensité spectrale mesurée $M(S_d)$ avec la transmittance spectrale ($T_E(\lambda)$) de l'étalon (50),
- dans lequel la transmittance spectrale minimale ($T_{E,MIN}$) de l'étalon (50) est inférieure ou égale à 90 % de la transmittance spectrale maximale ($T_{E,MAX}$) de l'étalon (50), et
- dans lequel la mise en correspondance comprend la comparaison de la distribution d'intensité spectrale mesurée $M(S_d)$ avec la transmittance spectrale ($T_E(\lambda)$) de l'étalon (50) en utilisant une analyse de corrélation croisée pour déterminer une fonction d'étalonnage spectral.

13. Appareil selon la revendication 12, dans lequel la cavité optique de l'étalon (50) consiste en un ou plusieurs matériaux solides, de préférence du silicium (Si) et/ou du dioxyde de silicium ($SiO_2$).

14. Appareil selon l'une quelconque des revendications 12-13, dans lequel l'interféromètre de Fabry-Pérot (100) comprend un actionneur électrostatique (140) pour faire varier l'espace de miroirs ($d_{FP}$) de l'interféromètre de Fabry-Pérot (100).

15. Appareil selon l'une quelconque des revendications 12-14, dans lequel l'appareil est en outre agencé pour fournir un signal de température ($S_{TEMP}$) indicatif de la température de fonctionnement de l'étalon (50).

Fig. 1

Fig. 2

Fig. 3a

Fig. 3b

Fig. 3c

Fig. 4a

Fig. 4b

Fig. 5

Fig. 6a

Fig. 6b

805 — Provide filtered peaks $P'_1$, $P'_2$ by filtering light with the etalon

810 — Measure a spectral intensity distribution $M(S_d)$
by scanning the interferometer over spectrum
of the filtered peaks $P'_1$, $P'_2$

815 — Associate a first control signal value $S_{d1}$
with a first peak wavelength $\lambda_{P1}$

820 — Associate a second control signal value $S_{d2}$
with a second peak wavelength $\lambda_{P2}$

830 — Determine calibration data $\lambda_{cal}(S_d)$ based on the
associated pairs $(S_{d1}, \lambda_{P1})$, $(S_{d2}, \lambda_{P2})$

# Fig. 6c

Fig. 7

Fig. 8a

Fig. 8b

Fig. 9

Fig. 10

Fig. 11

**EP 3 161 436 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004070768 A1